# EUROPÄISCHE PATENTSCHRIFT

(11) **EP 1 795 772 B1**
(45) Veröffentlichungstag und Bekanntmachung des Hinweises auf die Patenterteilung: **25.02.2015**
(21) Anmeldenummer: 06019960.1
(22) Anmeldetag: 23.09.2006
(51) Int. Cl.: F16D 3/38

(54) **Kreuzgelenkanordnung**
Universal joint assembly
Ensemble de joint universel

(30) Priorität: 08.12.2005 DE 102005058743
(43) Veröffentlichungstag der Anmeldung: 13.06.2007
(73) Patentinhaber: Voith Turbo GmbH & Co. KG, 89522 Heidenheim (DE)
(72) Erfinder: Grawenhof, Peter, 89547 Dettingen (DE); Rösle, Hans, 89522 Heidenheim (DE)
(74) Vertreter: Dr. Weitzel & Partner

(56) Entgegenhaltungen:
- EP-B1- 1 167 796
- DE-B4- 19 510 761
- US-A- 5 695 405
- HANS RÖSLE: "FEM-Simulation von Gelenkwellen mit inkompatiblen Netzen" August 2002 (2002-08), VOITH TURBO - DRUCKSCHRIFT G 1757 D , XP002533118

## Beschreibung

Die Erfindung betrifft eine Kreuzgelenkanordnung.

Kreuzgelenkanordnungen, insbesondere die Lagersysteme zur Lagerung der Zapfen eines Zapfenkreuzes in Gelenkgabeln, für den Einbau in Gelenkwellen sind in einer Vielzahl von Ausführungen für eine Vielzahl von Einsatzbeispielen bekannt. Stellvertretend wird dazu auf die Druckschrift G 1757 d 08/02 1.000, "FEM-Simulation von Gelenkwellen mit inkompatiblen Netzen", verwiesen, in der das Problem der Verformungen an den Lager- und Anschlusselementen unter Belastung offenbart wird.

Bekannt sind Ausführungen von Kreuzgelenkanordnungen für Gelenkwellen, welche ein Zapfenkreuz umfassen, das in zwei zueinander um 90 Grad versetzt angeordnete Gelenkgabeln gelagert wird. Die Gelenkgabeln selbst können einteilig oder zweiteilig ausgeführt sein. Zur Anbindung des Zapfenkreuzes in der Gelenkgabel ist jeweils für den einzelnen Zapfen eine entsprechende Lageranordnung vorgesehen, die ein Radiallager und ein Axiallager umfasst. Dabei werden die Radiallager stets als Wälzlager (Rollenlager) ausgeführt, die Axiallager können entweder als Wälzlager (Rollenlager) oder als Gleitlager konzipiert werden. Für die Anordnung des Axiallagers bestehen eine Vielzahl von Möglichkeiten, wobei jedoch unter Berücksichtigung der auftretenden Verformungen während des Betriebes der Gelenkwelle eine entsprechende konstruktive Auslegung der einzelnen Elemente der Lagerung erfolgt. Die Problematik einer derartigen Lageranordnung besteht darin, dass bei Wälzlagerung die einzelnen Wälzlager neben einem hohen Grunddrehmoment zusätzlich durch hohe Drehmomentstöße und gleichzeitige Querbeschleunigungen, insbesondere beim Einsatz in Walzwerksantrieben, beansprucht werden. Diese Belastungen führen zu elastischen Verformungen der Gelenkgabel sowohl im Bereich der Flansche als auch innerhalb des Gabelauges. Im Reversierbetrieb treten die Verformungen zusätzlich mit positivem oder negativen Wert auf. Diese betriebs- sowie konstruktionsbedingten Einflüsse ergeben Fluchtungsfehler mit einer ungünstigen Lasteinleitung in das Lager, nämlich einen Mittenversatz der Gabelbohrung, Schrägstellung der Bohrung, Durchbiegung des Zapfens sowie ein Radialspiel im Radiallager und die Einfederung des Wälzlagers, wie in der Druckschrift G 17 57 Abb. 12 offenbart wird. Die Folge ist dabei eine ungleichmäßige radiale Druckverteilung in der Lagerbohrung, wodurch örtlich hohe Belastungen an den Kontaktstellen der Wälzkörper des Radiallagers und überhöhte Kantenspannungen entstehen. Aus den elastischen Verformungen resultieren außerdem Relativbewegungen zwischen Zapfen und Gabelbohrung in axialer Richtung. Werden diese Relativbewegungen durch eine zu steife Lagereinbettung behindert, entstehen hohe Zwangskräfte und damit hohe Belastungen der Axiallager, aber nur, wenn das Axiallager als Wälzlager ausgeführt ist Bei Wälzlagerung führt dies in einem Segment des Axiallagers zu hohen Kantenspannungen und in dem gegenüberliegenden Segment zum Abheben der Rollen. Die ungleiche Belastung führt zu einer Tragfähigkeitsminderung. Die konstruktive Ausführung, insbesondere die Auslegung der einzelnen Bauelemente, ist dabei immer auf die möglicherweise auftretenden Verformungswege abzustimmen, so dass es nicht möglich ist, unabhängig von der Kenntnis dieser Einflüsse eine befriedigende Konstruktion bereitzustellen.

Eine Lösung dieser Problematik ist aus der Druckschrift EP 1 167 796 B1 mit einem Axiallager in Wälzlagerausführung bekannt. Diese ist durch die besondere Ausgestaltung einer Axiallagerlauffläche an einem Druckring charakterisiert. Hier wird allein durch die Ausgestaltung des Druckringes aufgrund des abgetragenen Materials ein Freiweg für die Wälzelemente geschaffen Der Nachteil dieser Ausführung besteht darin, dass der Weg somit nicht frei vorzugeben ist, sondern durch den über die Verformungswege bei einer bestimmten Betriebslast ermittelten notwendigen Abtrag bestimmt werden muss, wodurch für unterschiedliche Belastungen, insbesondere im Teillastbereich ein vollständiger Wälzkontakt aller Wälzelemente nicht gegeben ist und die negativen Folgen der Ausführung gemäß dem Stand der Technik nicht ganz ausgeschlossen werden können.

Aus DE 195 10 761 B4 ist eine Ausführung eines Zapfenlagers in Büchsenausführung vorbekannt. Als Axiallager dient dort ein als Kunststoffscheibe ausgebildeter Anlaufring mit elastischen Eigenschaften , der im Zentrum eine zur Stirnfläche vorspringende kreis- oder kreisförmig begrenzte Anlagefläche und in Randnähe eine ringförmige Stützfläche aufweist, wobei die Hohlräume jedoch nur der Aufnahme von Schmiermittel dienen.

US 5 695 405 beschreibt eine Kreuzgelenkanordnung mit radial und axial gelagerten Zapfen, wobei die Stirnseite der Zapfen gleitend auf einem zentralen ringförmigen Vorsprung mit Y-Stegen in einer Lagerhülse anliegt.

Der Erfindung liegt daher die Aufgabe zugrunde, ein Lagersystem für Kreuzgelenkanordnungen der eingangs genannten Art, insbesondere für den Einsatz in schweren Gelenkwellen derart weiterzuentwickeln, dass die genannten Nachteile vermieden werden, das heißt dieses einen einfachen Aufbau sowie eine geringe Anzahl von Bauelementen aufweist. Die Ausschaltung der negativen Einflüsse bei Verformung der drehmomentübertragenden Bauteile auf die Lageranordnung, insbesondere das Axiallager soll dabei unabhängig von konkreten Lastfällen mit einer möglichst standardisierten Lösung erreicht werden können. Die Kreuzgelenkanordnung, insbesondere das Lagersystem und dessen Einzelelemente sollen sich dabei durch einen geringen konstruktiven und fertigungstechnischen Aufwand sowie niedrige Kosten auszeichnen.

Die erfindungsgemäße Lösung ist gemäß einem ersten Lösungsansatz durch die Merkmale des Anspruches 1 und gemäß eines zweiten Lösungsansatzes durch die Merkmale der Ansprüche 18 und 28 charakterisiert. Vorteilhafte Ausgestaltungen sind jeweils in den Unteransprüchen beschrieben.

Eine Kreuzgelenkanordnung umfasst ein Zapfenkreuz mit zwei zueinander um die Gelenkachse (Drehachse der Kreuzgelenkwelle) mit 90 Grad versetzt und an der sich senkrecht zur Gelenkachse befindlichen Symmetrieebene des Zapfenkreuzes gespiegelt angeordnete Gelenkgabeln. Jede Gelenkgabel umfasst einen Flanschteil und zwei Lagerteile, wobei jeder Lagerteil eine Lagerbohrung aufweist, in welcher die Zapfen des Zapfenkreuzes gelagert sind. Jeder Zapfen ist dabei mittels einer Lageranordnung gelagert, welche mindestens ein Radiallager und ein Axiallager umfasst, wobei das Axiallager als Gleitlager ausgeführt ist. Erfindungsgemäß umfasst das Axialgleitlager gemäß einem ersten Lösungsansatz wenigstens ein separates Axialgleitlagerformelement, welches unter Bildung einer ersten Gleitpaarung sich wenigstens mittelbar an der Gelenkgabel und einer zweiten Gleitpaarung sich wenigstens mittelbar am Zapfenkreuz abstützt. Das Axialgleitlagerformelement umfasst eine erste ebene Stirnseite und eine zweite, die durch wenigstens einen Bereich einer Erhebung charakterisiert ist. Der Bereich der Erhebung bildet einen Abstützbereich, welcher in jedem Funktionszustand eine Gleitfläche entweder der ersten oder zweiten Gleitpaarung bildet. Das Axialgleitlagerformelement ist derart angeordnet, dass dieses ohne wirksame Betriebslast auf die Kreuzgelenkanordnung im Erhebungsbereich anliegt und unter Last in diesen elastisch einfedert, wobei der Bereich außerhalb vom Erhebungsbereich an der ersten oder zweiten Stirnseite in jedem Lastzustand frei von einer Berührung mit den Anschlusselementen ist. Der einen ersten Abstützbereich bildende Erhebungsbereich ist, bezogen auf konventionelle Lösungen, quasi im Bereich geringer Relativbewegungen und damit geringer elastischer Verformung angeordnet, während die am Erhebungsbereich angrenzenden von diesem freien Bereich in Einbaulage im Bereich größter Relativbewegung liegen. Dies bedeutet, dass in Bereichen größter Relativbewegungen auch unter Last ein beidseitiges Anliegen am Axialgleitlagerformelement vermieden wird und damit elastische Verformungen dort ausgeschlossen werden können.

Der Bereich größter axialer Relativbewegungen befindet sich in einer Schnittebene senkrecht zur Gelenkachse durch die jeweilige Zapfenachse. Auf der Seite des entlasteten Radiallagers in dieser Ebene werden die Relativbewegungen durch die Aussparungen am Axialgleitlagerformelement verspannungsfrei ermöglicht. Auf der gegenüberliegenden Seite im hohen Druckbereich des Radiallagers heben die Axiallagerelemente voneinander ab.

Gemäß einem zweiten Lösungsansatz umfasst das Axialgleitlager eine konventionelle Axialgleitlagerdruckscheibe und stützt sich an einem entsprechend geformten Anschlusselement ab. Die Formgebung entspricht dabei der für das Axialgleitlagerformelement im ersten Lösungsansatz beschriebenen. Auch hier sind an einer Stirnfläche wenigstens eines Anschlusselementes partielle Erhebungen vorgesehen. Dies wird durch Anformen bei der Formgebung beziehungsweise Herstellung oder Nachbearbeitung des jeweiligen Anschlusselementes erzielt oder aber durch spätere Verbindung mit entsprechend geformten Elementen, beispielsweise durch Stoffschluss. In diesem Fall werden beispielsweise entsprechende Modifikationen an
a) der Lagerbohrung, insbesondere bei Ausführung als Blindbohrung an der zum Zapfen gewandten Stirnseite
b) der Zapfenstirnseite
c) der Boden der Lagerbuchse für das Radiallager oder dem Lagerdeckel
vorgenommen. Diese sind vorzugsweise durch eine rotationssymmetrische Ausführung bestimmt, das heißt eine Erhebung, wobei die Erhebung im Querschnitt betrachtet durch konstante Abmessungen in Axialrichtung und senkrecht dazu betrachtet oder aber sich ändernde Abmessungen charakterisiert ist. Unter Axialrichtung wird dabei die Richtung der Zapfenachse, verstanden.

Mit der erfindungsgemäßen Lösung wird somit immer ein teilelastischer Formschluss realisiert, der auch den Einfluss hoher Axialkräfte nicht zu einer Schädigung des Lagers oder der Anschlusselemente führt. Die aus dem Stand der Technik bekannten negativen Auswirkungen aufgrund der Relativbewegungen werden hierbei durch die Form des Axialgleitlagerformelementes oder des Anschlusselementes kompensiert. Dieses ist dabei derart ausgestaltet, dass dieses erste Bereiche, die auch als Abstützbereiche bezeichnet werden, aufweist, welche vorzugsweise symmetrisch am Element - Axialgleitlagerformelement oder Anschlusselement - angeordnet sind und im wesentlichen im Bereich der Ebene liegen, die durch die Zapfenachse und die Gelenkachse charakterisiert ist beziehungsweise sich beidseitig von dieser Ebene in Umfangsrichtung des Zapfens erstrecken. Diese Bereiche sind dabei durch Bereiche größerer Querschnittsflächen charakterisiert, gegenüber den Querschnittsflächen der angrenzenden, inaktiven Bereiche, die mit den Aussparungen gebildet werden. Die Vergrößerung der Querschnittsfläche erfolgt dabei in Einbaulage betrachtet in Richtung der Zapfenachse. In den Bereichen größerer Querschnittsfläche findet dabei immer ein spielfreies Anliegen an den Anschlusselementen statt, während in den inaktiven Bereichen ein Anliegen immer mit Sicherheit vermieden wird. Das heißt in den Bereichen großer Relativbewegung verhindern Aussparungen (Materialabtrag) ein Anliegen der Anschlusselemente unter Betriebslast. Durch diese Formgebung, die quasi durch Materialreduzierungen in bestimmten Bereichen am Axialgleitlagerformelement oder dem Anschlusselement realisiert wird, wird somit Freiraum für die aufgrund der Verformung auftretenden Relativbewegungen der Anschlusselemente geschaffen. Dies betrifft insbesondere die Anschlusselemente für das Radiallager oder die Gelenkgabel. Die Querschnittsdifferenz beziehungsweise die Materialabtragungen sind dabei derart ausgelegt, dass auch in den Bereichen großer Relativbewegung keine Berührung zumindest auf einer der beiden Stirnseiten des Axialgleitlagerformelementes oder der Axialdruckscheibe mit den Anschlusselementen gegeben ist.

Bezüglich der Einbausituation des Axialgleitlagers werden im wesentlichen zwei unterschiedliche Lagepositionen unterschieden. Eine erste ist durch die Anordnung im Bereich der Zapfenwurzel und eine zweite im Bereich der Zapfenstirnseite charakterisiert. Je nach diesen Anordnungsmöglichkeiten ergeben sich auch unterschiedliche Ausgestaltungsmöglichkeiten der erfindungsgemäßen Lösungsansätze. Dabei werden symmetrische Ausführungen, insbesondere rotationssymmetrische, und nicht symmetrische Ausführungen unterschieden. Dies gilt sowohl für den ersten als auch zweiten Lösungsansatz.

Im einfachsten Fall gemäß dem ersten Lösungsansatz ist das Axialgleitlagerformelement als ring- oder scheibenförmiges Element ausgeführt, wobei dieses eine erste ebene Fläche bildende Stirnseite aufweist und eine zweite Stirnseite, an welcher Erhebungen zur Bildung der Abstützbereiche vorgesehen sind. Dabei findet eine Ausführung als ringförmiges Element insbesondere bei Anordnung des Axialgleitlagers im Bereich der Zapfenwurzel Verwendung. Vorzugsweise wird das ring- oder scheibenförmige Element dabei derart ausgestaltet, dass dies hinsichtlich zweier zueinander senkrechter Achsen rotationssymmetrisch ausgeführt ist. Es ergeben sich damit am Axialgleitlagerformelement jeweils zwei Abstützbereiche und zwei inaktive Bereiche, wobei in diesem Fall das Axialgleitlagerformelement unabhängig von der Drehrichtung der Kreuzgelenkanordnung einsetzbar ist, das heißt für beide Drehrichtungen ausgelegt ist. Die Abstützbereiche zur leichten elastischen Einfederung bei kleiner Relativbewegung sind dabei im wesentlichen im Bereich einer Ebene angeordnet, die durch die jeweilige Zapfenachse und die Gelenkachse charakterisiert ist und erstrecken sich ausgehend von dieser Ebene beidseitig über einen Teilbereich in Umfangsrichtung des Zapfens. Die Materialaussparung, das heißt die Bereiche geringeren Querschnitts sind dabei in den Gebieten höchster beziehungsweise größter Relativbewegung angeordnet. Hohe Belastungen der Anschlusselemente sollen durch die erfindungsgemäße Lösung ausgeschlossen werden. Die Bereiche größter Relativbewegung sind dabei durch einen Winkelbereich im Zapfen-Querschnitt, ausgehend von einer Ebene, die senkrecht zur Gelenkachse durch die Zapfenachse beschreibbar ist, von dieser in Umfangsrichtung des Zapfens in beide Richtungen jeweils in einem Winkelbereich von 45° <α < 60°, vorzugsweise α ~ 60° charakterisiert. Die Bereiche größerer Relativbewegung der Lageranschlusselemente erstrecken sich somit in einem Winkelbereich beidseits einer Symmetrieebene durch die Zapfenachse und die Gelenkachse. Die im Bereich der Ebene, die von der Gelenkachse und der Zapfenachse aufgespannt wird beziehungsweise beidseits dieser liegenden Bereiche werden als die Bereiche mit geringerer Relativbewegung bezeichnet. Deren Lage ist durch die Zapfenachse und die Gelenkachse beschreibbare Ebene angeordnet charakterisiert und erstreckt sich beidseitig ausgehend von dieser in Umfangsrichtung des Zapfens beziehungsweise der Gelenkgabelbohrung.

Bezüglich der Querschnittsgestaltung des Axialgleitlagerformelementes selbst bestehen keinerlei Restriktionen. Entscheidend ist lediglich, dass hier ein Materialabtrag in den bei herkömmlichen Lösungen hochbelasteten Bereichen vorgesehen ist.

Für die Ausführungen mit Anordnung des Axialgleitlagerformelementes im Bereich der Zapfenstirnseite sind ebenfalls eine Vielzahl von Geometrien denkbar. Auch hier kann das Element symmetrisch ausgeführt sein. Denkbar ist jedoch auch eine von der symmetrischen Ausführung abweichende Ausgestaltung. Es ist jedoch in jedem Fall sicherzustellen, dass in Umfangsrichtung eine Lagefixierung erfolgt. Diese kann durch Form- oder Kraftschluss realisiert werden. Bei formschlüssiger Ausführung wird das Axialgleitlagerformelement in einer entsprechenden Ausnehmung an der Zapfenstirnseite, der Gelenkgabel, einem Deckelelement oder dem Büchsenboden einer Radiallagerbüchse zentriert. Auch hier ist immer vorzugsweise eine Stirnfläche eben und die andere zweite durch eine Erhebung charakterisiert. Die eine Stirnseite liegt dabei an einem der Anschlusselemente flächig an, während die andere lediglich im Abstützbereich am Anschlusselement anliegt. Der Erhebungsbereich erstreckt sich dabei vorzugsweise über das gesamte Element in Tiefenrichtung, das heißt quasi in einer Ebene, die durch die Zapfenachse und die Gelenkachse charakterisiert ist über die gesamte Zapfenstirnseite . Die Erhebung selbst kann in dieser Richtung einen konstanten Querschnitt oder aber mit Querschnittsveränderungen ausgeführt sein. Dabei wird auch hier auf eine symmetrische Ausführung in Einbaulage parallel zur Gelenkachse Wert gelegt, um die freie Austauschbarkeit und die Unabhängigkeit im Hinblick auf die Drehrichtung beim Einbau zu gewährleisten. In der Ansicht in Richtung der Zapfenachse ergeben sich dann konkave oder konvexe oder anders geartete Querschnittsverläufe über die Erstreckungsrichtung in der durch die Zapfen- und die Gelenkachse beschreibbaren Ebene in Einbaulage betrachtet.

Das Axiallagerformelement weist für eine Anordnung im Bereich der Zapfenstirnseite eine ebene Stirnseite und eine zweite Stirnseite auf, an der der Abstützbereich angeordnet ist. Die Grundgeometrie, das heißt die Geometrie der ebenen Stirnseite ist vorzugsweise durch eine kreisförmige Kontur bestimmt, denkbar ist auch jede beliebige andere Geometrie. Bei Abweichung von der Kreiskontur können die Seitenflächen als Zentrierflächen genutzt werden , wenn an den Anschlusselementen insbesondere der Zapfenstirnseite entsprechend komplementäre Ausnehmungen beziehungsweise Anlageflächen für die Zentrierflächen vorgesehen sind. Die Erhebung selbst ist vorzugsweise symmetrisch bezogen auf die Ebene durch die Gelenk- und jeweilige Zapfenachse ausgeführt und erstreckt sich entlang dieser über die gesamte Abmessung des Axialgleitlagerformelementes in dieser Richtung.

Vorzugsweise ist die Höhe der Erhebung entlang der Ebene aus Zapfenachse und Gelenkachse und senkrecht dazu konstant. Denkbar sind jedoch auch weiche beziehungsweise gerundete (oder geneigt ausgeführte) Übergänge zu den von der Erhebung freien Bereichen.

Vorzugsweise ist die äußere Geometrie der einzelnen Axialgleitlagerformelemente derart gewählt, dass diese mit den Anschlusselementen hinsichtlich der Kontur und der Dimensionierung zumindest an der flächigen kreisförmigen Stirnseite korrespondiert. Im einzelnen bedeutet dies, dass vorzugsweise das Axialgleitlagerformelement jeweils mit dem Durchmesser ausgeführt ist, der entweder bei Anordnung an der Zapfenwurzel dem Außendurchmesser des Außenringes des Radiallagers entspricht oder aber bei Anordnung an der Zapfenstirnseite dem Zapfendurchmesser entspricht. Andere Ausführungen sind denkbar. Jedoch werden vorzugsweise immer die größtmöglichen Abmessungsbereiche für das flächige Anliegen der ebenen Stirnfläche gewählt, um ein optimales Tragverhalten zu gewährleisten.

Die erfindungsgemäße Lösung wird nachfolgend anhand von Figuren erläutert. Darin ist im einzelnen Folgendes dargestellt:
- Figur 1: verdeutlicht die Auswirkungen der Verformung und der axialen Verspannung von Zapfenkreuz und Gelenkgabel unter Belastung in der Ausführung Lagerbuchse mit konventioneller (ebener) Axialdruckscheibe (Anlaufscheibe);
- Figur 2: verdeutlicht anhand eines Axialschnittes durch eine Kreuzgelenkanordnung eine Anordnung eines erfindungsgemäßen Axialgleitlagerformelementes gemäß dem ersten Lösungsansatz im Bereich der Zapfenwurzel;
- Figuren 3a bis 3c: verdeutlichen eine mögliche Ausführung eines Axialgleitlagerformelementes gemäß Figur 2;
- Figur 4: verdeutlicht eine Anordnung eines Axialgleitlagerformelementes im Bereich der Zapfenstirnseite zur Abstützung an dieser und an einer Lagerbüchse;
- Figuren 5a bis 5c: verdeutlichen mögliche Geometrieausgestaltungen des Axialgleitlagerformelementes im Bereich der Erhebung;
- Figuren 6a, 6b1, 6b2: verdeutlichen eine alternative Ausführung zu Figur 4;
- Figuren 7 und 8: verdeutlichen eine mögliche Ausgestaltung eines Axialgleitlagerformelementes zur direkten Abstützung an der Gelenkgabel oder einem Lagerdeckel;
- Figur 9: verdeutlicht eine erste Ausführung gemäß dem zweiten Lösungsansatz;
- Figur 10: verdeutlicht eine zweite Ausführung gemäß dem zweiten Lösungsansatz.

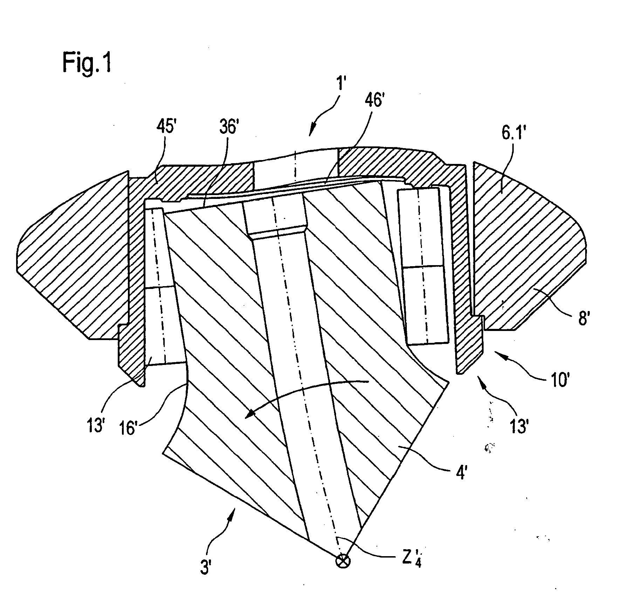

Die Figur 1 verdeutlicht in stark übertriebener Darstellung der Verformungen der Bauteile die der erfindungsgemäßen Lösung zugrundeliegende Problematik der Auswirkung der Relativbewegungen in axialer Richtung des Zapfens auf das Lagersystem eines Zapfenkreuzes 3' einer Gelenkgabel 6' anhand eines Ausschnittes aus einem Axialschnitt durch das Zapfenkreuz 3'. Dargestellt ist beispielhaft ein Zapfen 4', welcher über ein Lagersystem 10' in einer Gelenkgabelhälfte 6.1' gelagert ist. Erkennbar ist ferner ein Lagerteil 8' der Gelenkgabelhälfte 6.1'. Das Lagersystem 10' umfasst ein Radiallager 13'. Im dargestellten Fall wird die innere Laufbahn der Wälzelemente 15' des Radiallagers 13' von der Mantelfläche 16' des Zapfens 4' gebildet. Die äußere Lauffläche wird von einer Lagerbüchse 45' gebildet. Bei Drehmomentübertragung bewirkt die Umfangskraft eine ungleichmäßige Belastung des Radiallagers 13', das heißt in Richtung der Umfangskraft sehr hohe Kantenspannungen und auf der gegenüberliegenden Seite ein Spiel zwischen den Wälzelementen 15' und den Anschlusselementen Lagerbuchse 45' beziehungsweise Zapfen 4'. Dies gilt in Analogie auch für das dargestellte Axialgleitlager 46' als beidseitig ebene Anlaufscheibe konzipiert, welche gemäß der Ausführung von Figur 1 beispielsweise zwischen Zapfenstirnseite 36' und Innenumfang der Lagerbuchse 45' angeordnet.

Durch die Einfederung des Zapfenkreuzes in das Radiallager entstehen in axialer Richtung des Zapfens große Relativbewegungen, die bei formschlüssiger Einbaulage hohe Druckkräfte auf das beidseitig ebene Axialgleitlagerelement 46' und den Büchsenboden hervorrufen. Daraus resultieren hohe Beanspruchungen speziell in den Kerbregionen der Lagerbüchse.

Erkennbar ist, dass das Axialgleitlager 46' bei Anordnung an der Zapfenstirnseite 36' in Richtung der Umfangskraft betrachtet im Bereich einer Ebene des Axialschnitts durch die Kreuzgelenkanordnung nicht trägt, während der gegenüberliegende Bereich sehr hohen Druckkräften ausgesetzt ist.

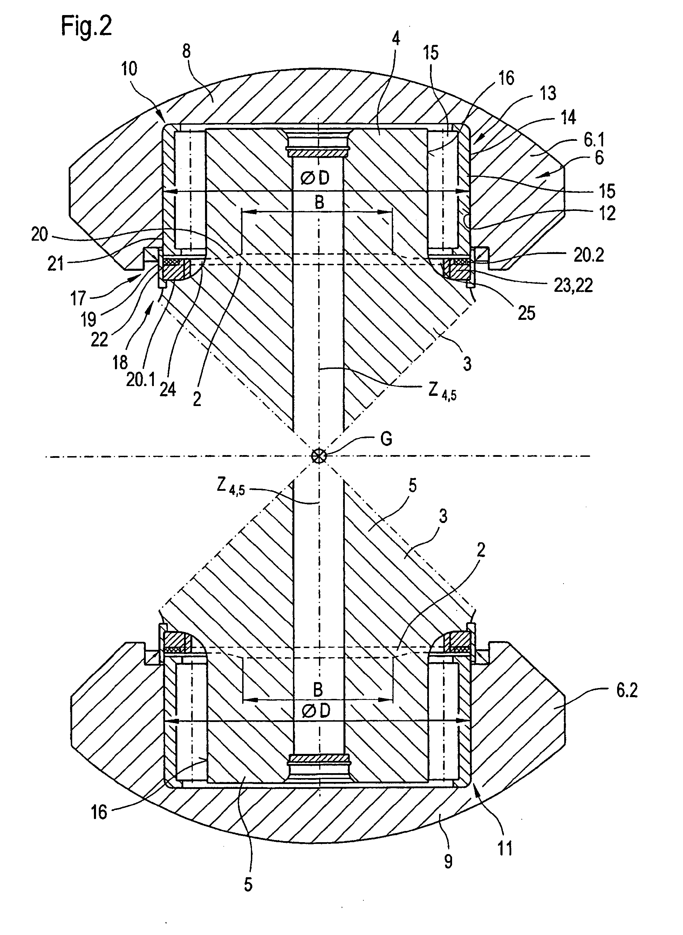

Die Figur 2 verdeutlicht in schematisch vereinfachter Darstellung anhand eines Segmentes aus einem Axialschnitt durch eine Kreuzgelenkanordnung 1 die Integration eines erfindungsgemäß gestalteten Axiallagers 17. Die Kreuzgelenkanordnung 1 umfasst dazu ein Zapfenkreuz 3, welches mit seinen um 90° zueinander versetzt angeordneten vier Zapfen, hier beispielhaft nur 4 und 5 in einer Gelenkgabel 6, gelagert ist. Die Gelenkgabel 6 ist dazu je nach Ausführung der Lager-Stützstrukturen einteilig oder zweiteilig ausgeführt. Die Teilung erfolgt dabei vorzugsweise mittig in einer Symmetrieebene senkrecht zur Achse der Lagerbohrungen im Flanschteil, wobei die einzelnen Gelenkgabelhälften 6.1 und hier gegenüberliegend 6.2 dann durch einen Flanschteil und charakterisiert sind und jede Gelenkgabelhälfte 6.1 und 6.2 eine Lager-Stützstruktur umfasst. Die Lagerung in den Lager-Stützstrukturen 8 und 9 erfolgt dabei in Lagerbohrungen, hier beispielhaft in Form einer Blind- beziehungsweise Sacklochbohrung 12 für die Gelenkgabelhälfte 6.1, insbesondere die Lager-Stützkonstruktion 8 dargestellt. Die um 90° versetzt angeordnete Gelenkgabel und darin gelagerten Zapfen sind nicht dargestellt. Das einzelne Lagersystem 10 umfasst dabei ein Radiallager 13. Dieses ist vorzugsweise als Wälzlager ausgeführt, wobei die äußere Lauffläche beispielhaft für die Wälzelemente 15 von einem Außenring 14 gebildet wird. Die innere Lauffläche für die Wälzelemente 15 wird beispielsweise von der Mantelfläche 16 des in der Lager-Stützkonstruktion 8 gelagerten Zapfens 4 gebildet. Des weiteren umfasst das Lagersystem 10 ein Axiallager 17, welches erfindungsgemäß ein Axialformgleitlagerelement 2 umfasst. Dieses ist gemäß Figur 2 im Bereich der Zapfenwurzel 18 des Zapfens 4 angeordnet. Das Axialformgleitlagerelement 2 bildet dabei mit den Anschlusselementen 21, 22 Gleitpaarungen 20.1 beziehungsweise 20.2. Dabei werden die einzelnen Gleitflächen an den Anschlusselementen 21, 22 vom Außenring 14 des Radiallagers 13 und einem Lagerträger 23 gebildet. Das Axialformgleitlagerelement 2 stützt sich dabei auf dem Lagerträger 23 ab, der sich wiederum am Zapfenkreuz 3, insbesondere der Zapfenwurzel 18, abstützt. Im dargestellten Fall bildet dabei die in Richtung zur Gelenkachse G weisende Stirnfläche 24 des Außenringes 14 des Radiallagers 13 direkt eine Gleitfläche und das Axialgleitlagerformelement 2 die weitere Gleitfläche der Gleitpaarung 20.1. Ferner ist hier eine zweite Gleitpaarung 20.2 vorgesehen, die aus dem Axialformgleitlagerelement 2 und dem Lagerträger 23 gebildet wird.

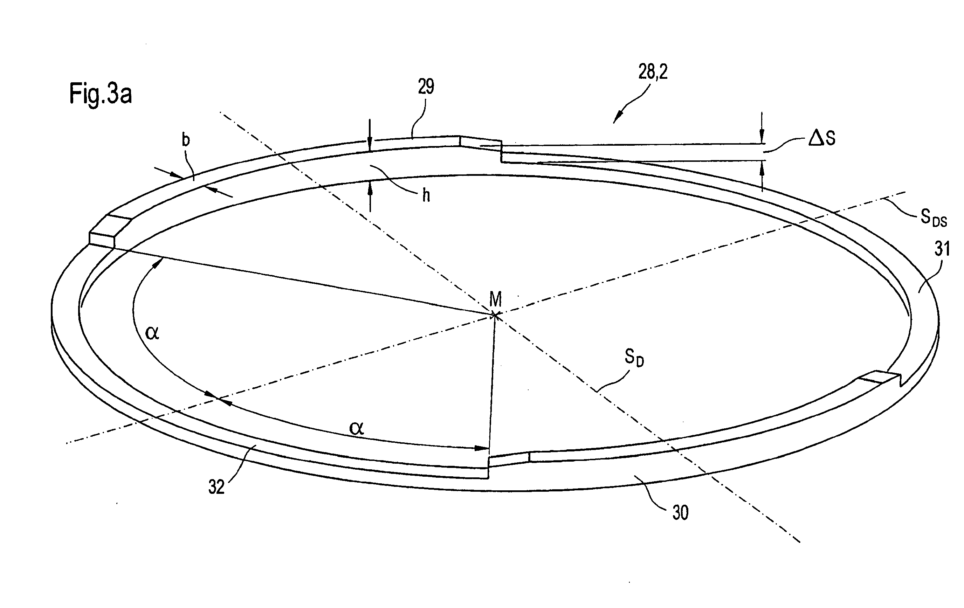

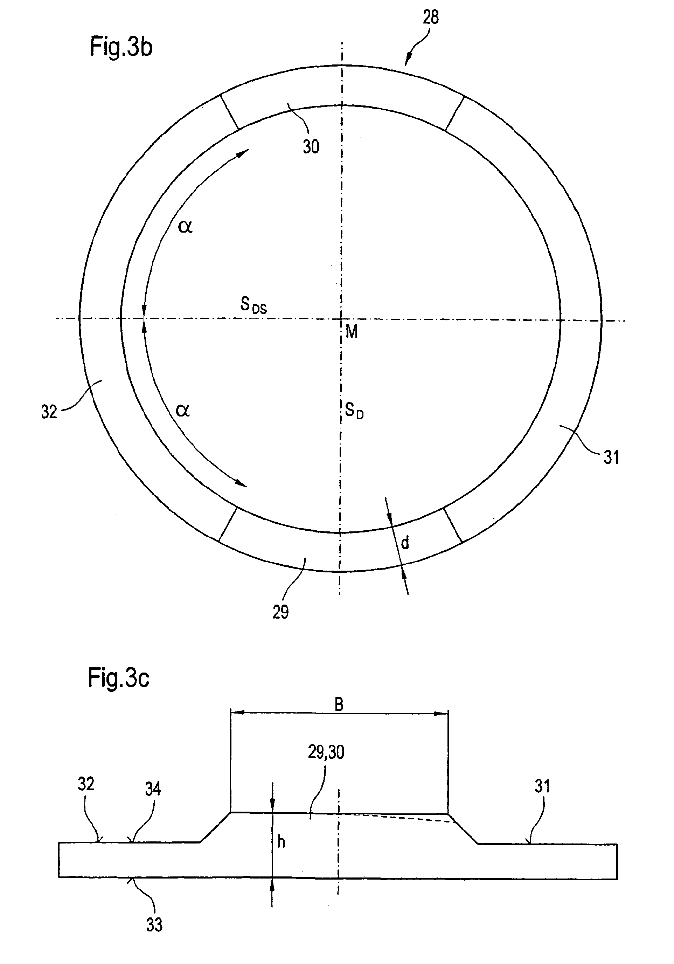

Die konkrete Ausführung des Axialformgleitlagerelementes 2 ist in Figur 3 wiedergegeben. Die Figur 3a verdeutlicht dabei eine Perspektivansicht, während die Figur 3b in schematisch vereinfachter Darstellung eine Ansicht von oben und Figur 3c eine Aussicht von vorn wiedergibt. Die in den Figuren 3a bis 3c dargestellte Ausführung des Axialformgleitlagerelementes 2 ist beispielhaft. Dieses ist als ringförmiges Element 28 ausgeführt, welches durch eine spezielle Formgebung charakterisiert ist, bei der elastische Verformungen nur im Bereich kleiner Relativbewegungen erfolgen. Durch die deutlich höhere Nachgiebigkeit entstehen keine hohen Verspannungen. In den Bereichen mit großen Relativbewegungen werden durch Materialausnehmungen Verspannungen vermieden. Als Material finden dabei Kunststoffe, insbesondere Elastomere, Verwendung, welche durch einen Elastizitätsmodul im Bereich von 5000 bis 20000 N/mm², vorzugsweise 5000 bis 10000 N/mm² charakterisiert sind. Das Axialformgleitlager 2 ist durch wenigstens zwei Bereiche unterschiedlich ausgelegter Querschnitte charakterisiert. Vorzugsweise erfolgt die Anordnung derart, dass die Bereiche unterschiedlicher Querschnitte in Einbaulage betrachtet symmetrisch bezogen auf die Zapfenachse, die mit der Mittenachse M des ringförmigen Elementes 28 zusammenfällt, angeordnet sind, so dass in Einbaulage in einer Kreuzgelenkanordnung die Funktion unabhängig von der Drehrichtung der Kreuzgelenkanordnung gewährleistet ist. Die Figuren 3a bis 3c verdeutlichen dabei ein derart für Normalbetrieb und Reversierbetrieb einsetzbares Axialformgleitlagerelement 2. Dazu weist dieses bezogen auf eine sich durch den theoretischen Mittelpunkt M erstreckende erste Symmetrielinie S_{D} in einer Ebene durch die Gelenk- und jeweiligen Zapfenachse auf. Hierzu sind zwei zueinander symmetrische Bereiche 29 und 30 angeordnet, welche die sich bei kleinerer Relativbewegung der Anschlusselemente anschmiegenden Tragbereiche beziehungsweise Abstützbereiche des Axiallagers im belasteten Zustand unter Wirkung der Umfangskraft bilden. Diese Abstützbereiche 29 und 30 sind hinsichtlich der Wahl ihres Querschnitts identisch ausgeführt und bilden aufgrund ihrer Geometrie Bereiche mit Erhebung gegenüber den übrigen Querschnittsbereichen. Die Ausgestaltung der Abstützbereiche 29, 30 weist ferner zu einer senkrecht zur Symmetrielinie S_{D} ausgerichteten und durch den Mittelpunkt M verlaufenden Symmetrielinie S_{DS} einen symmetrischen Aufbau auf. Die Bereiche 31 und 32 bilden Aussparungen und sind durch kleinere Querschnittsabmessungen charakterisiert als die Abstützbereiche. Die Aussparungen erstrecken sich gleichmäßig in Umfangsrichtung des ringförmigen Elementes 28 jeweils ausgehend von der Symmetrielinie S_{DS} über einen Bereich α. Außerhalb des Winkels α in Umfangsrichtung erfolgt ausgehend von der Symmetrielinie S_{DS} jeweils der Übergang zu den Bereichen 29 und 30, welche aufgrund ihres E-Moduls nur eine geringe Druckspannung bei Einfederung erfahren. Die Abstützbereiche 29 und 30 sind dabei immer aktiv und durch eine Querschnittsverstärkung in Höhenrichtung charakterisiert. Die inaktiven Bereiche 31, 32 sind in Einbaulage den Bereichen mit großen Relativbewegungen zugeordnet und weisen auch unter hoher Betriebslast immer noch ein Spiel auf. Der Einbau in die Kreuzgelenkanordnung gemäß Figur 2 erfolgt nun derart, dass die Abstützbereiche 29 und 30 in einer Ebene durch S_{D} angeordnet sind, die Bereiche 32 und 31 in der Ebene durch S_{DS}.

Die Einfederung des Zapfenkreuzes in das Radiallager bewirkt im Axiallager eine ungleichmäßige Kraftverteilung, wobei in der Ausführung als Wälzlager nur ein Bruchteil der theoretischen Tragfähigkeit genutzt werden kann. Die dabei fehlende Planparallelität der Axiallagerflächen führt zu einer vorzeitigen Ermüdung beziehungsweise Verschleiß. Andererseits werden aber die zugesicherten dynamischen und statischen Tragzahlen nur in einer steifen Lageranschlusskonstruktion garantiert. Um trotzdem die auftretenden Relativbewegungen zwischen Axiallager 12und den Lageranschlusselementen zu kompensieren, ist das Axialformgleitlager 17 derart in die Kreuzgelenkanordnung integriert, dass aufgrund der in Umfangsrichtung vorhandenen unterschiedlichen Querschnitte ein flächiges Anliegen an die Stirnfläche der Radiallagerschale nur in den Bereichen kleiner Relativbewegung gegeben ist. Die erfindungsgemäße Lösung ist dabei dadurch charakterisiert, dass das Axialformgleitlager 2 unter Belastung einen teilelastischen Formschluss mit den Erhebungsbereichen ermöglicht. In den Bereichen, in denen die Relativbewegungen klein sind, wird eine weiche Einfederung ermöglicht, während in den Bereichen mit größerer Relativbewegung Freiwege vorgesehen sind, die auch unter Last nicht vollständig ausgeschöpft werden. Das heißt dass die Aussparungen axiale Relativbewegungen zwischen Gelenkgabel G und Zapfenkreuz ohne Aufbau elastischer Verformungen in den Lagerbauteilen gewährleisten. Der Übergang zwischen den Bereichen unterschiedlicher Querschnittsgeometrie und/oder Abmessungen erfolgt dabei stetig oder stufig.

Im Bereich der Erhebungen bewirken die nur geringen Relativbewegungen elastische Verformungen des Axialgleitlagerformelements, die Materialaussparungen am Axialgleitlagerformelement ermöglichen große, kontaktfreie Relativbewegungen. Durch die Wahl eines Kunststoffes, insbesondere Elastomere, mit einem E-Modul von 5.000 - 10.000 N/mm² entstehen im Axiallager nur geringe Verspannungskräfte beziehungsweise Druckspannungen.

Das Axiallager 17 gemäß Figur 3a, b, insbesondere das Axialgleitlagerformelement 2, wird in die Kreuzgelenkanordnung gemäß Figur 2 in der Weise eingebaut, dass die Abstützbereiche 29 und 30 sich in einem Winkelbereich zwischen 30° und 45°, vorzugsweise ca. 30°, von einer durch die Gelenkachse G und die jeweilige Zapfenachse bestimmten Ebene durch die Symmetrieachse S_{D} erstrecken. Der Erhebungsbereich ist vorzugsweise nur in eine Richtung, das heißt an einer Stirnseite, gegeben, so dass auf der gegenüberliegenden Stirnseite ein flächiges Anliegen über den gesamten Umfang an das Anschlusselement 22, hier den Lagerträger 23, gegeben ist.

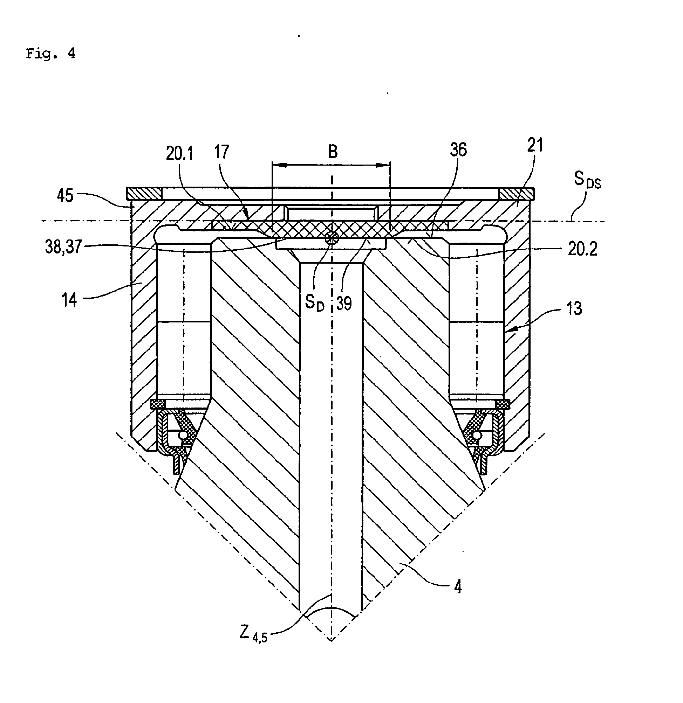

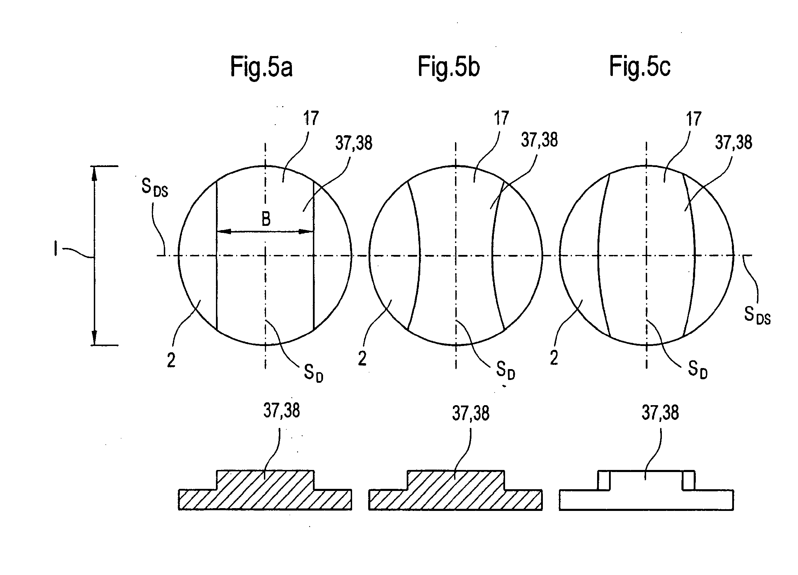

Figur 4 verdeutlicht eine weitere mögliche Anordnung eines Axiallagers 17 und einer Kreuzgelenkanordnung 1. Bei dieser Ausführung erfolgt die Anordnung an der Stirnseite 36 des in der entsprechenden Gelenkgabel 6 gelagerten Zapfens 4. Die Figur 4 stellt dabei eine erste mögliche Ausführungsform dar, bei welcher das Anschlusselement 21 von einer Lagerbüchse 45 gebildet wird, während das andere Lageranschlusselement 22 vom Zapfen 4 gebildet wird. Das Axialgleitlager 19 ist hier zwischen dem Außenring 14 des Radiallagers 13 und der Stirnfläche 36 des Zapfens 4 angeordnet. Zwischen diesen Elementen werden auch die Gleitpaarungen 20.1, 20.2 gebildet. Dazu ist das Axialformgleitlagerelement 2 als ring- oder scheibenförmiges Element ausgeführt, wobei die Scheibenform bevorzugt wird. Die Scheibe ist hinsichtlich der Geometrie am Außenumfang kreisförmig ausgeführt und umfasst einen nicht rotationssymmetrischen Abstützbereich Im Axialschnitt betrachtet erstreckt sich dieser über eine Breite B in Form eines Vorsprunges 38, der spielfrei anliegt. Die Ausrichtung des vom Vorsprung 38 gebildeten Abstützbereiches 37 erfolgt dabei auch hier vorzugsweise wieder beidseitig zur Symmetrielinie S_{D} in der Ebene durch die Zapfenachse Z_{4, 5} und die Gelenkachse G. Die entsprechende Materialaussparung befindet sich dabei auf der zum Zapfenkreuz gewandten Stirnfläche 39 des Axialgleitlagerformelementes 2. Der Abstützbereich 37 in Form des Vorsprunges 38 ist nicht rotationssymmetrisch ausgeführt, sondern erstreckt sich mit einer Breite B über jeweils eine vordefinierte Länge I, vorzugsweise die gesamte Ausdehnung des Axialgleitlagerformelementes 2 entlang der Symmetrielinie S_{D}. Die dargestellte Erhebung im Abstützbereich 37 kann durch ebene oder gekrümmte Begrenzungsflächen senkrecht zur Axialrichtung begrenzt sein. Mögliche Ausführungen sind in stark vereinfachter Darstellung für eine Ansicht von unten auf das Axialgleitlagerformelement 2 in Richtung Zapfenachse gemäß Figur 4 in den Abbildungen 5a bis 5c wiedergegeben. Diese zeigen Ansichten auf die tragende Stirnseite mit dem Abstützbereich 37 des Axialgleitlagerformelementes 2. Daraus wird ersichtlich, dass sich der Abstützbereich 37 jeweils über die gesamte Abmessung parallel zur Symmetrielinie S_{D} erstreckt. Die Figur 5a verdeutlicht dabei eine Ausführung mit konstanter Breite B des Vorsprunges 38 entlang beziehungsweise beidseits der Symmetrieachse S_{D}, das heißt parallelen Stirnflächen des Vorsprunges, während die Figur 5b eine Ausgestaltung mit konkaver und die Figur 5c eine Ausgestaltung mit konvexer Geometrie bezogen auf die Ausdehnung entlang der Symmetrielinie S_{D} wiedergibt.

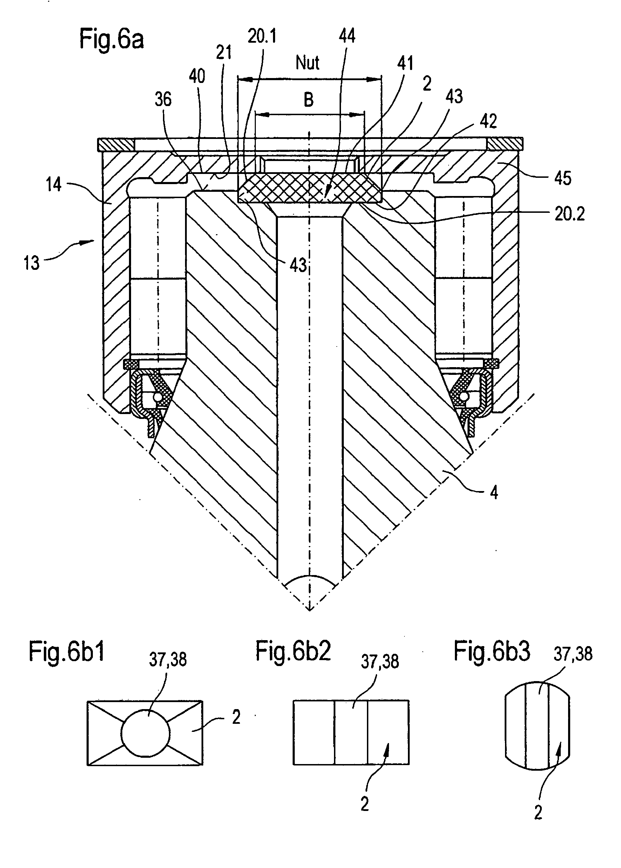

Die Figur 6a verdeutlicht eine Ausführung des Axialgleitlagerformelementes 2, bei welchem sich die Materialaussparung auf der in Einbaulage zum Büchsenboden 40 gerichteten Stirnseite des Zapfens 4 befindet. Der Büchsenboden 40 bildet dabei eine erste Gleitfläche für das Axialformgleitlagerelement 2, während die zweite Gleitfläche der Gleitpaarung 20.1 hier von der Stirnfläche 41 des Axialgleitlagerformelementes 2 gebildet wird. In Analogie gilt dies für die Gleitpaarung 20.2, welche zwischen dem Axialgleitlagerformelement 2 und der Stirnseite 36 des Zapfens 4 vorgesehen ist. Dabei ist vorzugsweise das Axialgleitlagerformelement 2 auch zum Zwecke seiner Zentrierung in einer entsprechenden Ausnehmung an der Stirnseite 36 des Zapfens 4 angeordnet. Vorzugsweise handelt es sich hier jedoch nicht um eine zylindrische Bohrung, sondern um eine Nut 44, welche gleichzeitig die Zentrierfunktion für das Axialgleitlagerformelement 2 übernimmt, das heißt die Lage des Axialformgleitlagerelementes 2 in Richtung der Umfangskraft örtlich fixiert. Die Breite der Nut und damit die Ausdehnung des Axialgleitlagerformelements 2 in der Ebene senkrecht zur Drehachse des Gelenks durch die Zapfenachse beträgt etwa die Hälfte des Zapfendurchmessers. Damit ergeben sich im Bereich der großen axialen Relativbewegungen entsprechende Freiräume zwischen Zapfenstirnfläche 36 und Büchsenboden 40. Das Axialgleitlagerformelement 2 ist dazu beispielhaft wie in den Abbildungen 6b1, 6b2 dargestellt als plattenförmiges Element ausgeführt, welches beispielhaft eine rechteckige Grundgeometrie besitzt und das an einer seiner Stirnseiten einen Erhebungsbereich 37 aufweist, welcher in Einbaulage einen ersten Abstützbereich bildet. Gemäß Figur 6b3 verläuft die Nut zur Zentrierung der Lage des Axialgleitlagerformelementes 2 parallel zur Symmetrielinie S_{D}. Denkbar ist, wie bereits ausgeführt, auch eine kreisförmige beziehungsweise zylindrische Ausgestaltung des Axialgleitlagerformelementes 2, wobei in diesem Fall andere Mittel zur Lagefixierung vorzusehen wären. Die Anordnung erfolgt dabei spielfrei zwischen dem Zapfen 4 und dem Büchsenboden 40, wobei entsprechend der Relativbewegungen nur eine geringe Einfederung aufgrund der geometrischen Gestaltung im Bereich der Stirnfläche 41 des Axialformgleitlagerelementes 2 erfolgt. Die in den Figuren 6b1 bis 6b3 dargestellten Ausführungen sind beispielhaft. Denkbar ist auch eine Ausgestaltung des Erhebungsbereiches wie in den Figuren 5a bis 5c dargestellt.

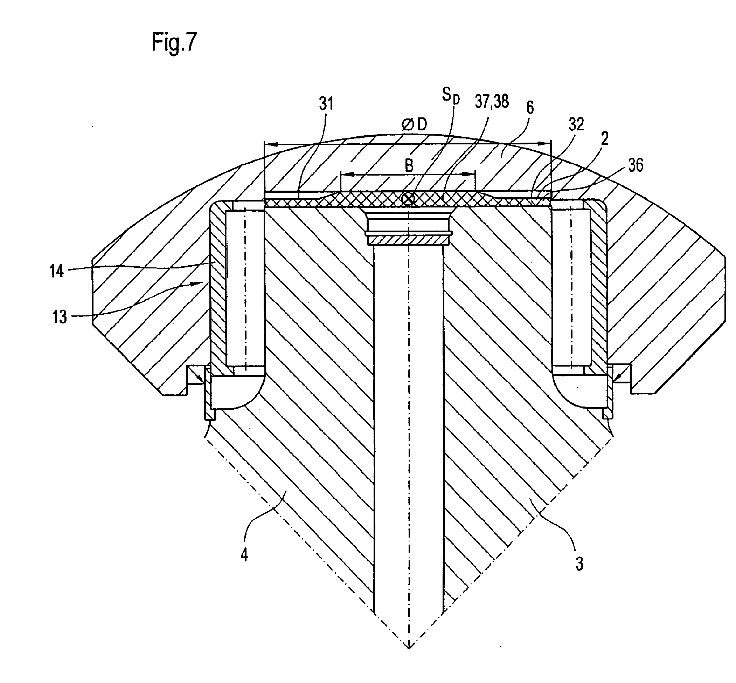

Die Figur 7 verdeutlicht demgegenüber eine alternative Ausgestaltung gemäß Figur 6 mit der Ausführung des Axiallagers in einer Blindbohrung bei direkter Abstützung an der Gelenkgabelhälfte 6. Das Axiallager 17 ist hier somit direkt zwischen Gelenkgabel 6 und Zapfen 4 des Zapfenkreuzes angeordnet. Bezüglich der Ausführung bestehen auch hier wieder mehrere Möglichkeiten. Vorzugsweise ist das Axialgleitlagerformelement 2 als zylindrische Scheibe ausgeführt, wobei diese im Mittenbereich, das heißt beidseitig der Symmetrielinie S_{D}, mit einer entsprechenden Erhebung ausgeführt ist. Diese kann sich über einen Teilbereich der radialen Ausdehnung des Scheibenelementes erstrecken oder aber, wie hier dargestellt, vorzugsweise über die gesamte Abmessung parallel oder geneigt oder gekrümmt gegenüber der Symmetrielinie S_{D}. Der Abstützbereich 37 ist dabei zur Gelenkgabel 6 gerichtet. Die gegenüberliegende ebene Stirnseite liegt flächig an der Stirnfläche 36 des Zapfens 4 an. In den Bereichen größerer Relativbewegung sind die von der Erhebung freien Bereiche 31, 32 angeordnet. Diese, insbesondere die die Erhebung tragende Stirnseite des Axialgleitlagerformelementes 2 bildet dabei in den Bereichen großer Relativbewegung einen Freiraum mit der Gelenkgabel G. Die Erhebung beziehungsweise der Abstützbereich 37 kann zylindrisch oder aber beispielhaft entsprechend den Ausführungen in den Figuren 5a bis 5c ausgeführt sein.

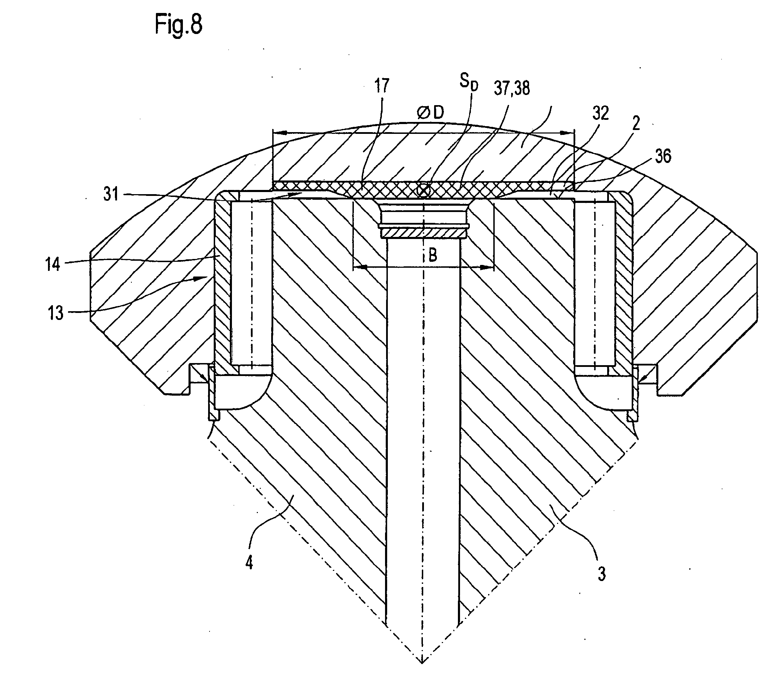

Demgegenüber verdeutlicht Figur 8 eine Ausgestaltung des Axialgleitlagerformelements 2 mit Abstützung zwischen Zapfenstirnseite 36 und dem Boden der Gabelbohrung 49 oder eines anders gestalteten Bodens, zum Beispiel in Form eines Lagerdeckels, wobei hier der Abstützbereich 37 zur Stirnseite 36 des Zapfens 4 gerichtet ist und sich an dieser abstützt.

In den Figuren 7 und 8 ist das Axialgleitlagerformelement 2 scheiben- oder ringförmig ausgeführt, wobei das scheiben- oder ringförmige Element eine erste durch eine ebene Fläche charakterisierte Stirnseite umfasst und der zur elastischen Einfederung vorgesehene Abstützbereich 37 an der zweiten gegenüberliegenden Stirnfläche ausgeführt ist. Der spielfrei am Anschlusselement in allen Funktionszuständen anliegende Abstützbereich 37 ist in diesem Fall nicht rotationssymmetrisch, sondern beispielsweise analog den Darstellungen in den Figuren 5a bis 5c beschrieben ausgeführt. Denkbar ist es auch, die Abstützbereiche 29, 30 nicht einteilig, sondern segmentiert auszuführen.

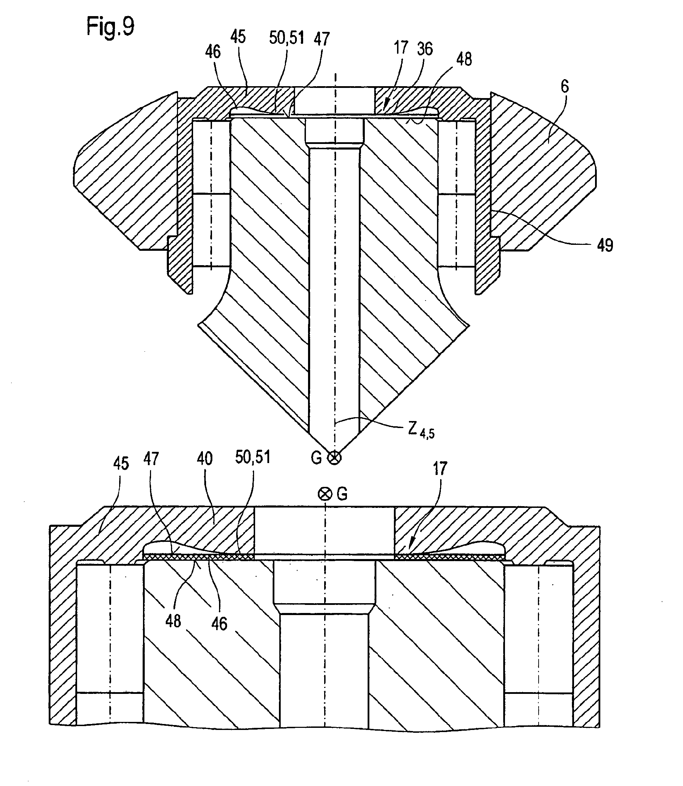

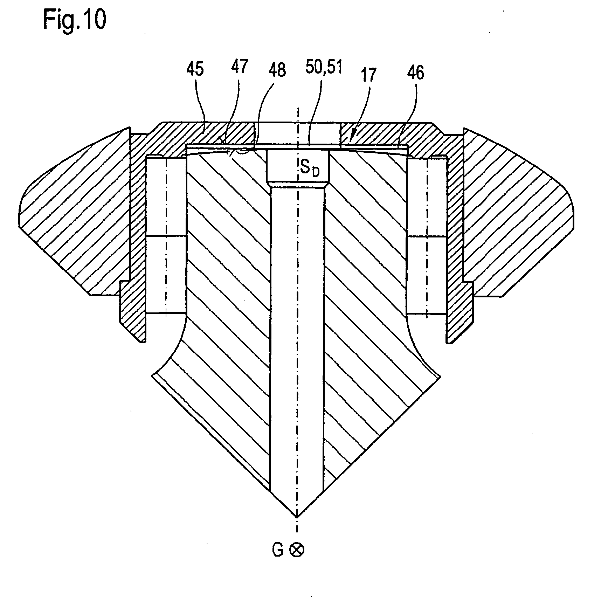

Verdeutlichen die Figuren 1 bis 8 Ausführungen mit separaten Axialgleitlagerformelement 2 kann diese Funktion gemäß Figur 9 und 10 gemäß einem zweiten Lösungsansatz auch von den Anschlusselementen Gelenkgabel 6, Zapfen 4, 5 und/oder Lagerbüchse übernommen werden, das heißt die Funktion des Axialgleitlagerformelementes 2 wird dann direkt von diesen Elementen ausgeführt.

Gemäß Figur 9 umfasst das Axiallager 17 eine Axiallagerdruckscheibe 46 wie bei Ausführungen nach dem Stand der Technik, vorzugsweise mit beidseitig ebener Stirnseite 47, 48. Die Funktion des Axialgleitlagerformelementes wird gemäß Figur 9 beispielhaft von der Lagerbüchse 45, insbesondere dem Büchsenboden 40 übernommen. Denkbar ist auch eine Funktionsübemahme durch die Gelenkgabel 6, insbesondere der geschlossenen Lagerbohrung 49.

Der Abstützbereich 50 in Form der Erhebung 51 ist dabei entsprechend in den Büchsenboden 40 eingearbeitet. Vorzugsweise erfolgt diese durch Abtrag von Material beispielsweise Abschleifen. Bezüglich der Ausführung der Erhebung 51 bestehen eine Vielzahl von Möglichkeiten mit der Einschränkung, dass infolge der Rotation der Lagerbüchse im Betrieb eine drehsymmetrische Formgebung zu wählen ist. Entscheidend ist, dass nur der Mittenbereich des Büchsenbodens 40 durch Erhebung als Abstützbereich 50 wirksam ist und die äußeren Bereiche des Büchsenbodens zur Zapfenstirnseite 36 Freiräume bilden. Diese Freiräume ermöglichen Relativbewegungen, ohne axiale Verspannungen an den Anschlusselementen zu verursachen.

Figur 10 verdeutlicht eine weitere Ausführung in integraler Bauweise am Zapfen 4, insbesondere der Stirnfläche 36. Hier wird der Abstützbereich 50 von einem Erhebungsbereich 51 gebildet, der in Einbaulage mit seiner Symmetrieachse S_{D} parallel zur Gelenkachse G ausgeführt ist. Diese Abstützbereiche können von einer Fläche oder eine Vielzahl einzelner, beabstandet zueinander segmentartig ausgeführter Flächenbereiche gebildet werden. Die Abstützung erfolgt direkt oder über eine Axiallagerdruckscheibe 46 wie bei Ausführungen nach dem Stand der Technik.

Auch die Ausführung des Erhebungsbereiches 51 an der Zapfenstirnfläche kann unterschiedlich erfolgen. Im einfachsten Fall wiederum durch entsprechenden Materialabtrag. Bezüglich der geometrischen Ausgestaltung bestehen auch hier eine Vielzahl von Möglichkeiten. Diese können im Querschnitt betrachtet gerundet oder aber mit scharfen Kanten ausgeführt sein. Ferner können diese in einer Ansicht von oben bezüglich der Zapfenachse rotationssymmetrisch ausgeführt sein oder aber bezüglich einer senkrecht zur Zapfenachse parallel zur Gelenkachse verlaufenden Achse symmetrisch.

### Bezugszeichenliste

- 1: Kreuzgelenkanordnung
- 2: Axialgleitlagerformelement
- 3: Zapfenkreuz
- 4, 5: Zapfen
- 6: Gelenkgabel
- 6.1, 6.2: Gelenkgabelhälfte
- 7: Flanschteil
- 8, 9: Lagerteil
- 10, 11: Lagersystem
- 12: Lagerbohrung
- 13: Radiallager
- 14: Außenring
- 15: Wälzelement
- 16: Zapfenmantelfläche
- 17: Axiallager
- 18: Zapfenwurzel
- 19: Axialformgleitlager
- 20, 20.1, 20.2: Gleitpaarung
- 21: Anschlusselement Außenseite
- 22: Anschlusselement Innenseite
- 23: Lagerträger
- 24: Stirnfläche
- 25: Gleitpaarung
- 26: Zentriereinrichtung
- 27: Dichtungshalter
- 28: ringförmiges Element
- 29: Abstützbereich
- 30: Abstützbereich
- 31: Bereich Aussparung
- 32: Bereich Aussparung
- 33: 1. Stirnfläche Axiallagerformelement
- 34: 2. Stirnfläche Axiallagerformelement
- 35: Fläche
- 36: Stirnseite
- 37: Abstützbereich
- 38: Kuppe, Vorsprung
- 39: Stirnseite
- 40: Büchsenboden
- 41: Stirnfläche
- 42: Gleitpaarung
- 43: Zapfenbohrung
- 44: Nut
- 45: Lagerbüchse
- 46: Axiallagerdruckscheibe als Anlaufscheibe
- 47: Stirnseite
- 48: Stirnseite
- 49: Lagerbohrung
- 50: Abstützbereich
- 51: Erhebung
- S_{DS}: Symmetrielinie
- S_{D}: Symmetrielinie
- a: Abstand von der Symmetrieachse in Umfangsrichtung
- Z_{4,5}: Zapfenachse
- G: Drehachse der Gelenkwelle
- α: Umfangswinkel Aussparung
- B: Breite des Abstützbereichs
- B: Dicke des Axialgleitlagerformelements

## Patentansprüche

1. Kreuzgelenkanordnung (1)
1.1 mit einem Zapfenkreuz (3), gelagert in zwei zueinander um eine Gelenkachse (G) mit 90° versetzt und an der sich senkrecht zur Gelenkachse (G) befindlichen Symmetrieebene des Zapfenkreuzes (3) gespiegelt angeordneten Gelenkgabeln (6) ;
1.2 jede Gelenkgabel (6) umfasst einen Flanschteil und zwei Lagerteile (8, 9), wobei jeder Lagerteil (8, 9) eine Lagerbohrung (12) aufweist, in welcher Zapfen (4, 5) des Zapfenkreuzes (3) gelagert sind;
1.3 jeder Zapfen (4, 5) weist eine Zapfenachse (Z_{4, 5}) auf und ist mittels einer Lageranordnung (10, 11) gelagert;
1.4 die Lageranordnung (10, 11) umfasst ein Radiallager (13) und ein Axiallager (17), wobei das Axiallager (17) als Gleitlager ausgeführt ist;
1.5 das Axiallager (17) umfasst wenigstens ein Axialgleitlagerformelement (2), welches unter Bildung einer ersten Gleitpaarung (20.1) sich wenigstens mittelbar an der Gelenkgabel (6) und einer zweiten Gleitpaarung (20.2) sich wenigstens mittelbar am Zapfenkreuz (3) abstützt;
1.6 das Axialgleitlagerformelement (2) umfasst eine erste ebene Stirnfläche (33) und eine zweite Stirnfläche (34), die durch wenigstens einen Erhebungsbereich charakterisiert ist;
1.7 der Erhebungsbereich bildet einen Abstützbereich (29, 30, 37, 38), welcher eine Gleitfläche der ersten oder zweiten Gleitpaarung (20.1, 20.2) bildet und sich abstützend an einem Anschlusselement der Kreuzgelenkanordnung (1) anliegt;
1.8 das Axialgleitlagerformelement (2) ist derart angeordnet, dass dieses im Zustand ohne Betriebslast der Kreuzgelenkanordnung (1) mit dem Abstützbereich (29, 30, 37, 38) am Anschlusselement anliegt und unter Last in diesen elastisch einfedert, wobei der oder die vom Abstützbereich freien Bereiche (31, 32) an der zweiten Stirnfläche (34) in jedem Betriebszustand frei von einer Berührung mit dem Anschlusselement sind und wobei in Einbaulage der Abstützbereich im Bereich geringer Relativbewegung zwischen dem Axialgleitlagerformelement (2) und dem Anschlusselement angeordnet ist, während die vom Abstützbereich freien Bereiche (31, 32) in Einbaulage im Bereich größter Relativbewegung zwischen dem Axialgleitlagerformelement (2) und dem Anschlusselement liegen;
**dadurch gekennzeichnet, dass**
1.9 das Axialgleitlagerformelement (2) als ringförmiges Element (28) ausgeführt ist und zwei Abstützbereiche (29, 30) aufweist, die in einer durch die Zapfenachse (Z_{4, 5}) und die Gelenkachse (G) aufgespannten Ebene angeordnet sind und sich von dieser Ebene ausgehend beidseitig über einen Teilbereich in Umfangsrichtung des Zapfens (4, 5) erstrecken; oder
1.10 das Axialgleitlagerformelement (2) als scheibenförmiges Element ausgeführt ist und sich der Abstützbereich (37, 38) nicht rotationssymmetrisch über eine Länge (I) des Axialgleitlagerformelementes (2) erstreckt.

2. Kreuzgelenkanordnung (1) gemäß Anspruch 1, **dadurch gekennzeichnet, dass** das Axialgleitlagerformelement (2) als scheibenförmiges Element ausgeführt ist und sich der Abstützbereich (37, 38) über die gesamte Abmessung des Axialgleitlagerformelementes (2), insbesondere beidseitig einer Symmetrielinie (S_{D}) erstreckt, die in einer durch die Zapfenachse (Z_{4, 5}) und die Gelenkachse (G) aufgespannten Ebene liegt.

3. Kreuzgelenkanordnung (1) nach Anspruch 1 oder 2, **dadurch gekennzeichnet, dass** die Abstützbereiche (29, 30) sich in Einbaulage, vorzugsweise beidseits ausgehend von der Zapfenachse (Z_{4, 5}) in einem Winkel von 0 bis ± 45°, vorzugsweise von 0 bis ± 30 von der Ebene beidseits erstrecken, die von der Zapfenachse (Z_{4,5}) und der Gelenkachse (G) gebildet wird.

4. Kreuzgelenkanordnung (1) nach einem der Ansprüche 1 bis 3, **dadurch gekennzeichnet, dass** wenigstens ein von der Erhebung freier Bereich (31, 32) sich in Einbaulage der Kreuzgelenkanordnung (1) in einem Winkel α von 0 bis ± 45°, vorzugsweise 0 bis ± 60°, ausgehend von einer Ebene, die senkrecht zur Ebene durch die Zapfenachse (Z_{4,5}) und die Gelenkachse (G) ausgerichtet ist, beidseits von dieser erstreckt.

5. Kreuzgelenkanordnung (1) nach Anspruch 4, **dadurch gekennzeichnet, dass** zwei von einer Erhebung freie Bereiche (31, 32) vorgesehen sind, wobei die freien Bereiche (31, 32) symmetrisch bezogen auf die Ebene aus Gelenkachse (G) und Zapfenachse (Z_{4, 5}) angeordnet ist.

6. Kreuzgelenkanordnung (1) nach einem der Ansprüche 1 bis 5, **dadurch gekennzeichnet, dass** das Axialgleitlagerformelement (2) aus einem der nachfolgend genannten Materialien besteht:
- einem Werkstoff mit einem Elastizitätsmodul von 5000 bis 20000 N/mm², vorzugsweise 5000 bis 10000 N/mm²
- einem Kunststoff, insbesondere Elastomer.

7. Kreuzgelenkanordnung (1) nach einem der Ansprüche 1 bis 6, **gekennzeichnet durch** die folgenden Merkmale:
7.1 das Axialgleitlagerformelement (2) ist als ringförmiges Element (28) ausgeführt;
7.2 das ringförmige Element (28) umfasst zwei bezüglich einer ersten Symmetrielinie (S_{D}) symmetrisch angeordnete und mit dem gleichen Querschnitt ausgeführte erste Bereiche in Form von Abstützbereichen (29, 30), die gegenüber den angrenzenden unter Belastung als zweite inaktiven Bereiche in Umfangsrichtung **durch** in Höhenrichtung des ringförmigen Elementes größere Abmessungen charakterisiert sind;
7.3 jeder der einzelnen Bereiche - erster Bereiche und zweiter Bereich - ist hinsichtlich seines Verlaufs in Umfangsrichtung von der ersten Symmetrielinie (S_{D}) bis zu einer weiteren zweiten, senkrecht zur ersten Symmetrielinie (S_{D}) verlaufenden zweiten Symmetrielinie (S_{DS}) hin betrachtet bis wenigstens in den Übergangsbereich jeweils **durch** einen konstanten Querschnitt charakterisiert.

8. Kreuzgelenkanordnung (1) nach Anspruch 7, dadurch charakterisiert, dass der Übergang zwischen dem ersten Abstützbereich (29, 30) und dem zweiten inaktiven Bereich mit stetiger Querschnittsanpassung in Umfangsrichtung erfolgen kann.

9. Kreuzgelenkanordnung (1) nach einem der Ansprüche 1 bis 8, **dadurch gekennzeichnet, dass** das Axialgleitlager (17) im Bereich der Zapfenwurzel (18) angeordnet ist und das Axialgleitlagerformelement (2) sich unter Bildung einer ersten Gleitpaarung (20.1) mit dem Abstützbereich (29, 30) an der Stirnfläche des Außenrings (14) des Radiallagers (13) abstützt und unter Bildung einer zweiten Gleitpaarung (20.2) am Zapfenkreuz (3) wenigstens mittelbar abstützt.

10. Kreuzgelenkanordnung (1) nach einem der Ansprüche 1 bis 8, **dadurch gekennzeichnet, dass** das Axialgleitlager (17) im Bereich der Zapfenwurzel (18) angeordnet ist und das Axialgleitlagerformelement (2) sich unter Bildung einer ersten Gleitpaarung (20.1) mit dem Abstützbereich am Außenring (14) des Radiallagers (13) abstützt und unter Bildung einer zweiten Gleitpaarung (20.2) am Zapfenkreuz (3) wenigstens mittelbar abstützt.

11. Kreuzgelenkanordnung (1) nach einem der Ansprüche 9 oder 10, **dadurch gekennzeichnet, dass** das Axialgleitlagerformelelement (2) sich über einen Lagerträger (23) im Bereich der Zapfenwurzel abstützt.

12. Kreuzgelenkanordnung (1) nach einem der Ansprüche 1 bis 6, **dadurch gekennzeichnet, dass** die Anordnung des Axiallagers (17) im Bereich der Zapfenstirnseite (36) erfolgt.

13. Kreuzgelenkanordnung (1) nach Anspruch 12, **dadurch gekennzeichnet, dass** das Axialgleitlagerformelement (2) zwischen Zapfenstirnseite (36) und Gelenkgabel (6) angeordnet ist.

14. Kreuzgelenkanordnung (1) nach Anspruch 13, **dadurch gekennzeichnet, dass** das Axialgleitlagerformelement (2) zwischen Zapfenstirnseite (36) und einer als Außenring (14) des Radiallagers (13) dienende Lagerbüchse (45) in Richtung zur Zapfenachse (Z_{4,5}) angeordnet ist.

15. Kreuzgelenkanordnung (1) nach Anspruch 14, **dadurch gekennzeichnet, dass** das Axialgleitlagerformelelement (2) zwischen Zapfenstirnseite (36) und einem sich an der Gelenkgabel (G) abstützenden Deckelelement angeordnet ist.

16. Kreuzgelenkanordnung (1) nach einem der Ansprüche 12 bis 15, **dadurch gekennzeichnet, dass** der Abstützbereich (32, 38) entweder mit konstanter Breite oder mit einer beispielsweise konkaven oder konvexen Geometrie beschreibenden Breitenänderung über die Erstreckung des Elementes ausgeführt ist.

17. Kreuzgelenkanordnung (1) nach einem der Ansprüche 12 bis 16, **dadurch gekennzeichnet, dass** die Kontur der ersten ebenen Stirnfläche (33) derart gewählt ist, dass das Axialgleitlagerformelement (2) an dazu komplementären Ausnehmungen an dem Anschlusselement zentriert werden kann.

18. Kreuzgelenkanordnung (1)
18.1 mit einem Zapfenkreuz (3), gelagert in zwei zueinander um eine Gelenkachse (G) mit 90° versetzt und an der sich senkrecht zur Gelenkachse (G) befindlichen Symmetrieebene des Zapfenkreuzes (3) gespiegelt angeordneten Gelenkgabeln (6);
18.2 jede Gelenkgabel (6) umfasst einen Flanschteil (7) und zwei Lagerteile (8, 9), wobei jeder Lagerteil (8, 9) eine Lagerbohrung (12) aufweist, in welcher Zapfen (4, 5) des Zapfenkreuzes (3) gelagert sind;
18.3 jeder Zapfen (4, 5) ) weist eine Zapfenachse (Z_{4, 5}) auf und ist mittels einer Lageranordnung (10, 11) gelagert;
18.4 die Lageranordnung (10, 11) umfasst ein Radiallager (13) und ein Axiallager (17), wobei das Axiallager (17) als Gleitlager ausgeführt ist;
**gekennzeichnet durch** die folgenden Merkmale:
18.5 das Axiallager (17) umfasst eine Axiallagerdruckscheibe (46) mit zwei Stirnseiten (47, 48);
18.6 die Axiallagerdruckscheibe (46) stützt sich wenigstens mittelbar an der Gelenkgabel (6) und am Zapfenkreuz (3) ab;
18.7 die Axiallagerdruckscheibe (46) bildet mit den Stirnseiten (47, 48) und jeweils einem Anschlusselement der Kreuzgelenkanordnung (1) eine Gleitpaarung (20.1, 20.2);
18.8 an einem der Anschlusselemente ist an der zur Axiallagerdruckscheibe (46) zugewandten Fläche ein Abstützbereich (50) in Form eines Erhebungsbereiches (51) vorgesehen;
18.9 der Abstützbereich (50) in Form des Erhebungsbereiches (51) erstreckt sich entlang einer **durch** eine senkrecht zur Zapfenachse (Z_{4, 5}) und parallel zur Gelenkachse (G) ausgerichteten Achse (S_{D})

19. Kreuzgelenkanordnung (1) nach Anspruch 18, **dadurch gekennzeichnet, dass** der Abstützbereich (50) in Form des Erhebungsbereiches (51) sich beidseits der Achse (S_{D}) über die gesamte Ausdehnung der Axialgleitlagerdruckscheibe erstreckt.

20. Kreuzgelenkanordnung (1) nach einem der Ansprüche 18 oder 19, **dadurch gekennzeichnet, dass** der Erhebungsbereich (51) mit sich in Richtung der Achse (S_{D}) veränderlichem Querschnitt ausgebildet ist.

21. Kreuzgelenkanordnung (1) nach Anspruch 20, **dadurch gekennzeichnet, dass** der Erhebungsbereich (51) in Richtung der Achse (S_{D}) mit konstanter Breite oder konvex oder konkav ausgebildet ist.

22. Kreuzgelenkanordnung (1) nach einem der Ansprüche 18 bis 21, **dadurch gekennzeichnet, dass** der Erhebungsbereich (51) durch Materialabtrag an dem Anschlusselement eingearbeitet ist.

23. Kreuzgelenkanordnung (1) nach einem der Ansprüche 18 bis 22, **dadurch gekennzeichnet, dass** das den Erhebungsbereich (51) tragende Anschlusselement von einem der nachfolgend genannten Anschlusselemente gebildet wird:
- Stirnseite (36) des Zapfens (4, 5);
- zur Stirnseite des Zapfens ausgerichtete Fläche einer in der Gelenkgabel (6) eingearbeiteten Bohrung;
- zur Stirnseite des Zapfens (4, 5) gerichtet Fläche einer Lagerbüchse (45);
- einem Lagerdeckel.

24. Kreuzgelenkanordnung (1) nach einem der Ansprüche 18 bis 23, **dadurch gekennzeichnet, dass** der Erhebungsbereich (51) von einzelnen Segmenten gebildet wird.

25. Kreuzgelenkanordnung (1) nach einem der Ansprüche 1 bis 24, **dadurch gekennzeichnet, dass** die Lagerbohrung (12) als Durchgangsbohrung oder als Blindbohrung ausgeführt ist.

26. Kreuzgelenkanordnung (1) nach einem der Ansprüche 1 bis 25, **dadurch gekennzeichnet, dass** die einzelne Gelenkgabel (6) einteilig oder zweiteilig ausgeführt ist.

27. Kreuzgelenkanordnung (1) nach einem der Ansprüche 1 bis 26, **dadurch gekennzeichnet, dass** die Zapfen (4, 5) des Zapfenkreuzes (3) in einer Ebene oder in zwei zueinander parallelen und versetzt angeordneten Ebenen angeordnet sind.

28. Kreuzgelenkanordnung (1)
28.1 mit einem Zapfenkreuz (3), gelagert in zwei zueinander um eine Gelenkachse (G) mit 90° versetzt und an der sich senkrecht zur Gelenkachse (G) befindlichen Symmetrieebene des Zapfenkreuzes (3) gespiegelt angeordneten Gelenkgabeln (6) ;
28.2 jede Gelenkgabel (6) umfasst einen Flanschteil (7) und zwei Lagerteile (8, 9), wobei jeder Lagerteil (8, 9) eine Lagerbohrung (12) aufweist, in welcher Zapfen (4, 5) des Zapfenkreuzes (3) gelagert sind;
28.3 jeder Zapfen (4, 5) weist eine Zapfenachse (Z_{4, 5}) auf und ist mittels einer Lageranordnung (10, 11) gelagert;
28.4 die Lageranordnung (10, 11) umfasst ein Radiallager (13) und ein Axiallager (17), wobei das Axiallager (17) als Gleitlager ausgeführt ist;
**gekennzeichnet durch** die folgenden Merkmale:
28.5 an einer Stirnfläche (36) des Zapfens (4, 5) ist ein von einem Entlastungsbereich (51) gebildeter Abstützbereich (50) vorgesehen, der sich mit seiner Symmetrieachse (S_{D}) parallel zur Gelenkachse (G) erstreckt oder in einer Ansicht von oben auf die Zapfenachse (Z_{4, 5}) rotationssymmetrisch ausgeführt ist.

## Claims

1. A universal joint arrangement (1),
1.1 comprising a spider (3), mounted in two joint yokes (6) which are arranged in an offset manner with respect to each other by 90° about a joint axis (G) and arranged in a mirrored manner on the plane of symmetry of the spider (3) situated perpendicularly to the joint axis (G);
1.2 each joint yoke (6) comprises a flange part and two bearing parts (8, 9), wherein each bearing part (8, 9) comprises a bearing hole (12) in which pins (4, 5) of the spider (3) are mounted;
1.3 each pin (4, 5) has a pin axis (Z_{4, 5}) and is mounted by means of a bearing arrangement (10, 11);
1.4 the bearing arrangement (10, 11) comprises a radial bearing (13) and an axial bearing (17), wherein the axial bearing (17) is arranged as a plain bearing;
1.5 the axial bearing (17) comprises at least one axial plain bearing forming element (2), which under formation of a first slide pairing (20.1) rests at least indirectly on the joint yoke (6) and a second slide pairing (20.2) rests at least indirectly on the spider (3);
1.6 the axial plain bearing forming element (2) comprises a first flat face surface (33) and a second face surface (34) which is **characterized by** at least one elevated region;
1.7 the elevated region forms a supporting region (29, 30, 37, 38) which forms a sliding surface of the first or second slide pairing (20.1, 20.2) and rests in a supporting manner on a connecting element of the universal joint arrangement (1);
1.8 the axial plain bearing forming element (2) is arranged in such a way that it rests with the support region (29, 30, 37, 38) on the connecting element in the state without operating load of the universal joint arrangement (1) and elastically springs into the same under load, wherein the region or regions (31, 32) which is or are free from the supporting region are free from contact with the connecting element on the second face surface (34) in every operating state, and wherein the supporting region is arranged in the installed position in the region of a low relative movement between the axial plain bearing forming element (2) and the connecting element, whereas the regions (31, 32) which are free from the supporting region are situated in the installed position in the region of the greatest relative movement between the axial plain bearing forming element (2) and the connecting element; **characterized in that**
1.9 the axial plain bearing forming element (2) is arranged as an annular element (28) and comprises two supporting regions (29, 30), which are arranged in a plane spanned by the pin axis (Z_{4, 5}) and the joint axis (G) and, originating from said plane, extend on both sides of a partial region in the circumferential direction of the pin (4, 5), or
1.10 the axial plain bearing forming element (2) is arranged as a disc-shaped element and the supporting region (37, 38) does not extend in a rotational-symmetrical manner over a length (I) of the axial plain bearing forming element (2).

2. A universal joint arrangement (1) according to claim 1, **characterized in that** the axial plain bearing forming element (2) is arranged as a disc-shaped element and the supporting region (37, 38) extends over the entire dimension of the axial plain bearing forming element (2), especially on both sides of a line of symmetry (S_{D}) which is situated in a plane spanned by the pin axis (Z_{4, 5}) and the joint axis (G).

3. A universal joint arrangement (1) according to claim 1 or 2, **characterized in that** the supporting regions (29, 30) extend in the installation position, preferably on both sides originating from the pin axis (Z_{4, 5}), at an angle of 0 to ± 45°, preferably of 0 to ± 30°, from the plane which is formed by the pin axis (Z_{4, 5}) and the joint axis (G).

4. A universal joint arrangement (1) according to one of the claims 1 to 3, **characterized in that** at least one region (31, 32) which is free from the elevation extends in the installation position of the universal joint arrangement (1) at an angle of 0 to ± 45°, preferably of 0 to ± 60°, from a plane which is aligned perpendicularly to the plane through the pin axis (Z_{4, 5}) and the joint axis (G) on both sides of said plane.

5. A universal joint arrangement (1) according to claim 4, **characterized in that** two regions (31, 32) which are free from an elevation are provided, wherein the free regions (31, 32) are arranged symmetrically with respect to the plane consisting of the joint axis (G) and the pin axis (Z_{4, 5}).

6. A universal joint arrangement (1) according to one of the claims 1 to 5, **characterized in that** the axial plain bearing forming element (2) consists of one of the materials mentioned below:
- a material with a modulus of elasticity of 5000 to 20,000 N/mm², preferably 5000 to 10,000 N/mm²;
- a plastic material, especially an elastomer.

7. A universal joint arrangement (1) according to one of the claims 1 to 6, **characterized by** the following features:
7.1 the axial bearing forming element (2) is arranged as an annular element (28);
7.2 the annular element (28) comprises two first regions in form of supporting regions (29, 30), which regions are arranged symmetrically with respect to a first line of symmetry (S_{D}), are arranged with the same cross-section and are characterized as dimensions which are **characterized in** relation to the adjacent regions under load as the second inactive regions in the circumferential direction by dimensions which are greater in the direction of height of the annular element;
7.3 each of the individual regions, namely the first region and the second region, is respectively **characterized by** a constant cross-section with respect to its progression in the circumferential direction until at least into the transitional region from the first line of symmetry (S_{D}) up to a further second line of symmetry (S_{DS}) extending perpendicularly to the first line of symmetry (S_{D}).

8. A universal joint arrangement (1) according to claim 7, **characterized in that** the transition between the first supporting region (29, 30) and the second inactive region can occur with constant adjustment of the cross-section in the circumferential direction.

9. A universal joint arrangement (1) according to one of the claims 1 to 8, **characterized in that** the axial plain bearing (17) is arranged in the region of the root (18) of the pin, and the axial plain bearing forming element (2) rests under formation of a first slide pairing (20.1) with the supporting region (29, 30) on the face surface of the outer ring (14) of the radial bearing (13) and is supported at least indirectly under formation of a second slide pairing (20.2) on the spider (3).

10. A universal joint arrangement (1) according to one of the claims 1 to 8, **characterized in that** the axial plain bearing (17) is arranged in the region of the root (18) of the pin, and the axial plain bearing forming element (2) rests under formation of a first slide pairing (20.1) with the supporting region on the outer ring (14) of the radial bearing (13) and rests at least indirectly on the spider (3) under formation of a second slide pairing (20.2).

11. A universal joint arrangement (1) according to one of the claims 9 or 10, **characterized in that** the axial plain bearing forming element (2) is supported via a bearing carrier (23) in the region of the root of the pin.

12. A universal joint arrangement (1) according to one of the claims 1 to 6, **characterized in that** the arrangement of the axial bearing (17) occurs in the region of the face end (36) of the pin.

13. A universal joint arrangement (1) according to claim 12, **characterized in that** the axial plain bearing forming element (2) is arranged between the face end (36) of the pin and the joint yoke (6).

14. A universal joint arrangement (1) according to claim 13, **characterized in that** the axial plain bearing forming element (2) is arranged in the direction the pin axis (Z_{4, 5}) between the face end (36) of the pin and a bearing bush (45) used as an outer ring (14) of the radial bearing (13).

15. A universal joint arrangement (1) according to claim 14, **characterized in that** the axial plain bearing forming element (2) is arranged between the face end (36) of the pin and a cover element supported on the joint yoke (G).

16. A universal joint arrangement (1) according to one of the claims 12 to 15, **characterized in that** the supporting region (32, 38) is arranged either with constant width or with a change in width which describes a concave or convex geometry for example over the extension of the element.

17. A universal joint arrangement (1) according to one of the claims 12 to 16, **characterized in that** the contour of the first flat face end (33) is selected in such a way that the axial plain bearing forming element (2) can be centred on recesses complementary thereto on the connecting element.

18. A universal joint arrangement (1),
18.1 comprising a spider (3), mounted in two joint yokes (6) which are arranged in an offset manner with respect to each other by 90° about a joint axis (G) and arranged in a mirrored manner on the plane of symmetry of the spider (3) situated perpendicularly to the joint axis (G);
18.2 each joint yoke (6) comprises a flange part (7) and two bearing parts (8, 9), wherein each bearing part (8, 9) comprises a bearing hole (12) in which pins (4, 5) of the spider (3) are mounted;
18.3 each pin (4, 5) has a pin axis (Z_{4, 5}) and is mounted by means of a bearing arrangement (10, 11);
18.4 the bearing arrangement (10, 11) comprises a radial bearing (13) and an axial bearing (17), wherein the axial bearing (17) is arranged as a plain bearing; **characterized by** the following features:
18.5 the axial bearing (17) comprises an axial bearing pressure disc (46) with two face ends (47, 48);
18.6 the axial bearing pressure disc (46) is supported at least indirectly on the joint yoke (6) and on the spider (3);
18.7 the axial bearing pressure disc (46) forms a slide pairing (20.1, 20.2) with the face ends (47, 48) and one respective connecting element of the universal joint arrangement (1);
18.8 a supporting region (50) in form of an elevated region (51) is provided on one of the connecting elements on the surface facing the axial bearing pressure disc (46);
18.9 the supporting region (50) in form of the elevated region (51) extends along an axis (S_{D}) aligned perpendicularly to the pin axis (Z_{4, 5}) and parallel to the joint axis (G).

19. A universal joint arrangement (1) according to claim 18, **characterized in that** the supporting region (50) in form of the elevated region (51) extends on either side of the axis (S_{D}) over the entire extension of the axial plain bearing pressure disc.

20. A universal joint arrangement (1) according to one of the claims 18 or 19, **characterized in that** the elevated region (51) is arranged with a cross-section which is variable in the direction of the axis (S_{D}).

21. A universal joint arrangement (1) according to claim 20, **characterized in that** the elevated region (51) is arranged in the direction of the axis (S_{D}) with constant width or in a convex or concave manner.

22. A universal joint arrangement (1) according to one of the claims 18 to 21, **characterized in that** the elevated region (51) is incorporated in the connecting element by removal of material.

23. A universal joint arrangement (1) according to one of the claims 18 to 22, **characterized in that** the connecting element carrying the elevated region (51) is formed by one of the following connecting elements:
- face end (36) of the pin (4, 5);
- surface of a hole which is incorporated in the joint yoke (6), which surface is aligned towards the face end of the pin;
- surface of a bearing bush (45) directed towards the face end of the pin (4, 5);
- a bearing cover.

24. A universal joint arrangement (1) according to one of the claims 18 to 23, **characterized in that** the elevated region (51) is formed by individual segments.

25. A universal joint arrangement (1) according to one of the claims 1 to 24, **characterized in that** the bearing hole (12) is arranged as a through-hole or as a blind hole.

26. A universal joint arrangement (1) according to one of the claims 1 to 25, **characterized in that** the individual joint yoke (6) is arranged integrally or in two parts.

27. A universal joint arrangement (1) according to one of the claims 1 to 26, **characterized in that** the pins (4, 5) of the spider (3) are arranged in a plane or in two planes arranged in parallel and offset with respect to each other.

28. A universal joint arrangement (1),
28.1 comprising a spider (3), mounted in two joint yokes (6) which are arranged in an offset manner with respect to each other by 90° about a joint axis (G) and arranged in a mirrored manner on the plane of symmetry of the spider (3) situated perpendicularly to the joint axis (G);
28.2 each joint yoke (6) comprises a flange part (7) and two bearing parts (8, 9), wherein each bearing part (8, 9) comprises a bearing hole (12) in which pins (4, 5) of the spider (3) are mounted;
28.3 each pin (4, 5) has a pin axis (Z_{4, 5}) and is mounted by means of a bearing arrangement (10, 11);
28.4 the bearing arrangement (10, 11) comprises a radial bearing (13) and an axial bearing (17), wherein the axial bearing (17) is arranged as a plain bearing; **characterized by** the following features:
28.5 a supporting region (50) formed by a relief region (51) is provided on a face end (36) of the pin (4, 5), which supporting region extends with its axis of symmetry (S_{D}) parallel to the joint axis (G) or is arranged in a rotational-symmetrical manner with respect to the pin axis (Z_{4, 5}) in a view from above.

## Revendications

1. Disposition de joint à croisillon (1)
1.1 avec une croix de tourillons (3) supportée dans deux fourches d'articulation (6) décalées de 90° l'une par rapport à l'autre autour d'un axe d'articulation (G) et symétriques en miroir sur le plan de symétrie de la croix de tourillons (3) perpendiculaire à l'axe d'articulation (G) ;
1.2 chaque fourche d'articulation (6) comprend une partie de bride et deux parties de palier (8, 9), chaque partie de palier (8, 9) présentant un alésage de palier (12) dans lequel des tourillons (4, 5) de la croix de tourillons (3) sont supportés ;
1.3 chaque tourillon (4, 5) présente un axe de tourillon (Z_{4,5}) et est supporté au moyen d'une disposition de soutien (10, 11) ;
1.4 la disposition de soutien (10, 11) comprend un palier radial (13) et un palier axial (17), lequel palier axial (17) est réalisé comme un palier de glissement ;
1.5 le palier axial (17) comprend au moins un élément conformé de palier de glissement axial (2), qui s'appuie au moins indirectement, en formant une première paire de glissement (20.1), sur la fourche d'articulation (6) et au moins indirectement, en formant une deuxième paire de glissement (20.2) sur la croix de tourillons (3) ;
1.6 l'élément conformé de palier de glissement axial (2) comprend une première surface d'extrémité plane (33) et une deuxième surface d'extrémité (34) qui est **caractérisée par** au moins une zone surélevée ;
1.7 la zone surélevée forme une zone d'appui (29, 30, 37, 38) qui forme une surface de glissement de la première paire de glissement ou de la deuxième (20.1, 20.2) et repose en s'y appuyant sur un élément de raccordement de la disposition de joint à croisillon (1) ;
1.8 l'élément conformé de palier de glissement axial (2) est disposé de telle façon qu'il repose, dans l'état sans charge de fonctionnement de la disposition de joint à croisillon (1), sur l'élément de raccordement par la zone d'appui (29, 30, 37, 38) et recule de façon élastique dans celui-ci sous charge, les zones (31, 32) dégagées de la zone d'appui sur la deuxième surface d'extrémité (34) étant libres de tout contact avec l'élément de raccordement dans tous les états de fonctionnement et la position de montage de la zone d'appui étant disposée dans la zone de faible mouvement relatif entre l'élément conformé de palier de glissement axial (2) et l'élément de raccordement, tandis que les zones (31, 32) dégagées de la zone d'appui se trouvent, dans la position de montage, dans la zone de plus grand mouvement relatif entre l'élément conformé de palier de glissement axial (2) et l'élément de raccordement ;
**caractérisée en ce que**
1.9 l'élément conformé de palier de glissement axial (2) est réalisé comme un élément annulaire (28) et présente deux zones d'appui (29, 30) qui sont disposées dans un plan formé par l'axe de tourillon (Z_{4,5}) et l'axe d'articulation (G) et s'étendent à partir de ce plan des deux côtés sur une partie de zone dans le sens de la circonférence du tourillon (4, 5), ou
1.10 l'élément conformé de palier de glissement axial (2) est conçu comme un élément en forme de disque et la zone d'appui (37, 38) s'étend de façon non symétrique dans le sens de rotation sur une longueur (I) de l'élément conformé de palier de glissement axial (2).

2. Disposition de joint à croisillon (1) selon la revendication 1, **caractérisée en ce que** l'élément conformé de palier de glissement axial (2) est conçu comme un élément en forme de disque et la zone d'appui (37, 38) s'étend sur toute la dimension de l'élément conformé de palier de glissement axial (2), en particulier de part et d'autre d'une ligne de symétrie (S_{D}) qui se trouve dans un plan formé par l'axe de tourillon (Z_{4,5}) et l'axe d'articulation (G).

3. Disposition de joint à croisillon (1) selon la revendication 1 ou 2, **caractérisée en ce que** les zones d'appui (29, 30) s'étendent, dans la position de montage, de préférence des deux côtés à partir de l'axe de tourillon (Z_{4,5}) selon un angle de 0 à ±45°, de préférence de 0 à ±30° à partir du plan formé par l'axe de tourillon (Z_{4,5}) et l'axe d'articulation (G).

4. Disposition de joint à croisillon (1) selon l'une des revendications 1 à 3, **caractérisée en ce qu'**au moins une zone (31, 32) sans surélévation s'étend, dans la position de montage de la disposition de joint à croisillon (1), selon un angle α de 0 à ±45°, de préférence de 0 à ±60°, à partir d'un plan perpendiculaire au plan formé par l'axe de tourillon (Z_{4,5}) et l'axe d'articulation (G), de part et d'autre de celui-ci.

5. Disposition de joint à croisillon (1) selon la revendication 4, **caractérisée en ce que** deux zones (31, 32) sans surélévation sont prévues, les zones (31, 32) sans surélévation étant symétriques par rapport au plan formé par l'axe d'articulation (G) et l'axe de tourillon (Z_{4,5}).

6. Disposition de joint à croisillon (1) selon l'une des revendications 1 à 5, **caractérisée en ce que** l'élément conformé de palier de glissement axial (2) se compose de l'un des matériaux suivants :
- un matériau ayant un module d'élasticité de 5000 à 20000 N/mm², de préférence de 5000 à 10000 N/mm²
- une matière synthétique, en particulier un élastomère.

7. Disposition de joint à croisillon (1) selon l'une des revendications 1 à 6, **caractérisée en ce que** :
7.1 l'élément conformé de palier de glissement axial (2) est réalisé comme un élément annulaire (28) ;
7.2 l'élément annulaire (28) comprend deux premières zones disposées de façon symétrique par rapport à une première ligne de symétrie (S_{D}) et réalisées avec la même section, qui forment des zones d'appui (29, 30) caractérisées dans le sens de la circonférence comme des deuxièmes zones inactives par rapport aux zones voisines sous contrainte par de plus grandes dimensions dans le sens de la hauteur de l'élément annulaire ;
7.3 chacune des différentes zones (premières zones et deuxième zone) est **caractérisée par** une section constante sur son contour dans le sens de la circonférence, vu de la première ligne de symétrie (S_{D}) à une deuxième ligne de symétrie (S_{DS}) perpendiculaire à la première ligne de symétrie (S_{D}), au moins jusqu'à la zone de transition.

8. Disposition de joint à croisillon (1) selon la revendication 7, **caractérisée en ce que** la transition entre la première zone d'appui (29, 30) et la deuxième zone inactive peut s'effectuer avec une adaptation constante de la section dans le sens de la circonférence.

9. Disposition de joint à croisillon (1) selon l'une des revendications 1 à 8, **caractérisée en ce que** le palier de glissement axial (17) est disposé au niveau de l'origine des tourillons (18) et l'élément conformé de palier de glissement axial (2) s'appuie avec la zone d'appui (29, 30), en formant une première paire de glissement (20.1), sur la face d'extrémité de la bague extérieure (14) du palier radial (13) et en formant une deuxième paire de glissement (20.2), au moins indirectement sur la croix de tourillons (3).

10. Disposition de joint à croisillon (1) selon l'une des revendications 1 à 8, **caractérisée en ce que** le palier de glissement axial (17) est disposé au niveau de l'origine des tourillons (18) et l'élément conformé de palier de glissement axial (2) s'appuie avec la zone d'appui, en formant une première paire de glissement (20.1), sur la bague extérieure (14) du palier radial (13) et en formant une deuxième paire de glissement (20.2), au moins indirectement sur la croix de tourillons (3).

11. Disposition de joint à croisillon (1) selon l'une des revendications 9 ou 10, **caractérisée en ce que** l'élément conformé de palier de glissement axial (2) s'appuie par l'intermédiaire d'un support de palier (23) au niveau de l'origine des tourillons.

12. Disposition de joint à croisillon (1) selon l'une des revendications 1 à 6, **caractérisée en ce que** le palier axial (17) est disposé dans la zone de la face d'extrémité du tourillon (36).

13. Disposition de joint à croisillon (1) selon la revendication 12, **caractérisée en ce que** l'élément conformé de palier de glissement axial (2) est disposé entre la face d'extrémité du tourillon (36) et la fourche d'articulation (6).

14. Disposition de joint à croisillon (1) selon la revendication 13, **caractérisée en ce que** l'élément conformé de palier de glissement axial (2) est disposé entre la face d'extrémité du tourillon (36) et une douille de palier (45) servant de bague extérieure (14) du palier radial (13) dans la direction de l'axe de tourillon (Z_{4,5}).

15. Disposition de joint à croisillon (1) selon la revendication 14, **caractérisée en ce que** l'élément conformé de palier de glissement axial (2) est disposé entre la face d'extrémité du tourillon (36) et un élément formant couvercle qui s'appuie sur la fourche d'articulation (G).

16. Disposition de joint à croisillon (1) selon l'une des revendications 12 à 15, **caractérisée en ce que** la zone d'appui (32, 38) est réalisée soit avec une largeur constante, soit avec un changement de largeur décrivant par exemple une géométrie concave ou convexe sur l'étendue de l'élément.

17. Disposition de joint à croisillon (1) selon l'une des revendications 12 à 16, **caractérisée en ce que** le contour de la première surface d'extrémité plane (33) est choisi de telle manière que l'élément conformé de palier de glissement axial (2) puisse être centré sur des évidements complémentaires sur l'élément de raccordement.

18. Disposition de joint à croisillon (1)
18.1 avec une croix de tourillons (3) supportée dans deux fourches d'articulation (6) décalées de 90° l'une par rapport à l'autre autour d'un axe d'articulation (G) et symétriques en miroir sur le plan de symétrie de la croix de tourillons (3) perpendiculaire à l'axe d'articulation (G) ;
18.2 chaque fourche d'articulation (6) comprend une partie de bride (7) et deux parties de palier (8, 9), chaque partie de palier (8, 9) présentant un alésage de palier (12) dans lequel des tourillons (4, 5) de la croix de tourillons (3) sont supportés ;
18.3 chaque tourillon (4, 5) présente un axe de tourillon (Z_{4,5}) et est supporté au moyen d'une disposition de soutien (10, 11) ;
18.4 la disposition de soutien (10, 11) comprend un palier radial (13) et un palier axial (17), lequel palier axial (17) est réalisé comme un palier de glissement ;
**caractérisée en ce que** :
18.5 le palier axial (17) comprend une plaque de poussée de palier axial (46) avec deux faces d'extrémité (47, 48) ;
18.6 la plaque de poussée de palier axial (46) s'appuie au moins indirectement sur la fourche d'articulation (6) et sur la croix de tourillons (3) ;
18.7 la plaque de poussée de palier axial (46) forme avec les faces d'extrémité (47, 48) et avec chaque élément de raccordement de la disposition de joint à croisillon (1) une paire de glissement (20.1, 20.2) ;
18.8 il est prévu sur l'un des éléments de raccordement, sur la surface tournée vers la plaque de poussée de palier axial (46), une zone d'appui (50) prenant la forme d'une zone surélevée (51) ;
18.9 la zone d'appui (50) prenant la forme de la zone surélevée (51) s'étend le long d'un axe (S_{D}) orienté perpendiculairement à l'axe de tourillon (Z_{4,5}) et parallèlement à l'axe d'articulation (G).

19. Disposition de joint à croisillon (1) selon la revendication 18, **caractérisée en ce que** la zone d'appui (50) prenant la forme de la zone surélevée (51) s'étend des deux côtés de l'axe (S_{D}) sur toute l'étendue de la plaque de poussée de palier axial.

20. Disposition de joint à croisillon (1) selon l'une des revendications 18 ou 19, **caractérisée en ce que** la zone surélevée (51) est conformée avec une section variable dans la direction de l'axe (S_{D}).

21. Disposition de joint à croisillon (1) selon la revendication 20, **caractérisée en ce que** la zone surélevée (51) est conformée avec une largeur constante ou convexe ou concave dans la direction de l'axe (S_{D}).

22. Disposition de joint à croisillon (1) selon l'une des revendications 18 à 21, **caractérisée en ce que** la zone surélevée (51) est réalisée par enlèvement de matière sur l'élément de raccordement.

23. Disposition de joint à croisillon (1) selon l'une des revendications 18 à 22, **caractérisée en ce que** l'élément de raccordement portant la zone surélevée (51) est formé par l'un des éléments de raccordement suivants :
- face d'extrémité (36) du tourillon (4, 5) ;
- surface d'un alésage ménagé dans la fourche d'articulation (6) orientée vers la face d'extrémité du tourillon ;
- surface d'une douille de palier (45) orientée vers la face d'extrémité du tourillon (4, 5) ;
- un couvercle de palier.

24. Disposition de joint à croisillon (1) selon l'une des revendications 18 à 23, **caractérisée en ce que** la zone surélevée (51) est formée de segments séparés.

25. Disposition de joint à croisillon (1) selon l'une des revendications 1 à 24, **caractérisée en ce que** l'alésage de palier (12) est réalisé comme un alésage traversant ou un alésage borgne.

26. Disposition de joint à croisillon (1) selon l'une des revendications 1 à 25, **caractérisée en ce que** la fourche d'articulation (6) est réalisée en une partie ou en deux parties.

27. Disposition de joint à croisillon (1) selon l'une des revendications 1 à 26, **caractérisée en ce que** les tourillons (4, 5) de la croix de tourillons (3) sont disposés dans un plan ou dans deux plans parallèles l'un à l'autre et décalés.

28. Disposition de joint à croisillon (1)
28.1 avec une croix de tourillons (3) supportée dans deux fourches d'articulation (6) décalées de 90° l'une par rapport à l'autre autour d'un axe d'articulation et symétriques en miroir sur le plan de symétrie de la croix de tourillons (3) perpendiculaire à l'axe d'articulation (G) ;
28.2 chaque fourche d'articulation (6) comprend une partie de bride (7) et deux parties de palier (8, 9), chaque partie de palier (8, 9) présentant un alésage de palier (12) dans lequel des tourillons (4, 5) de la croix de tourillons (3) sont supportés ;
28.3 chaque tourillon (4, 5) présente un axe de tourillon (Z_{4,5}) et est supporté au moyen d'une disposition de soutien (10, 11) ;
28.4 la disposition de soutien (10, 11) comprend un palier radial (13) et un palier axial (17), lequel palier axial (17) est réalisé comme un palier de glissement ;
**caractérisée en ce que** :
28.5 il est prévu sur une surface d'extrémité (36) du tourillon (4, 5) une zone d'appui (50) formée par une zone de décharge (51) qui s'étend avec son axe de symétrie (S_{D}) parallèlement à l'axe d'articulation (G) ou qui est réalisée de façon symétrique dans le sens de la rotation en vue de dessus sur l'axe de tourillon (Z_{4,5}).
